# EUROPEAN PATENT APPLICATION

(11) **EP 4 495 156 A1**
(43) Date of publication of application: **22.01.2025**
(21) Application number: 23770888.8
(22) Date of filing: 16.03.2023
(51) Int. Cl.: C08G 59/38, C08G 59/50, C08J 5/04, C08J 5/24, C08L 21/00, C08L 63/00

(54) **EPOXY RESIN COMPOSITION FOR RESIN TRANSFER MOLDING, CURED RESIN PRODUCT, FIBER-REINFORCED COMPOSITE MATERIAL, AND METHOD FOR MANUFACTURING SAME**

(30) Priority: 17.03.2022 JP 2022042541; 25.07.2022 JP 2022117799
(71) Applicant: Toray Industries, Inc., Tokyo 103-8666 (JP)
(72) Inventor: KONISHI Daisuke, Nagoya-shi, Aichi 455-8502 (JP); HIRANO Noriyuki, Nagoya-shi, Aichi 455-8502 (JP); TSUCHIDA Hiroya, Nagoya-shi, Aichi 455-8502 (JP); TOMIOKA Nobuyuki, Nagoya-shi, Aichi 455-8502 (JP); WATARI Ryohei, Nagoya-shi, Aichi 455-8502 (JP)
(74) Representative: Mewburn Ellis LLP
(86) International application number: PCT/JP2023/010373
(87) International publication number: WO 2023/176935

(57) **Abstract**

An object is to provide an epoxy resin composition for resin transfer molding (RTM) having a low viscosity and low volatility and excellent in balance among elastic modulus at the time of wet heating, heat resistance at the time of wetting, and fracture toughness of a cured resin of the epoxy resin composition, and to provide a large fiber-reinforced composite material having a high Vf and including the epoxy resin composition. An epoxy resin composition for RTM including a component [A], a component [B], and a component [C] described below:
[A] a tetrafunctional glycidyl amine type epoxy resin,
[B] at least one aromatic amine curing agent selected from the group consisting of an alkylbenzenediamine and a methylenebisaniline,
[C] an aniline type epoxy resin represented by Formula (I): 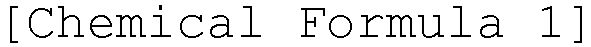 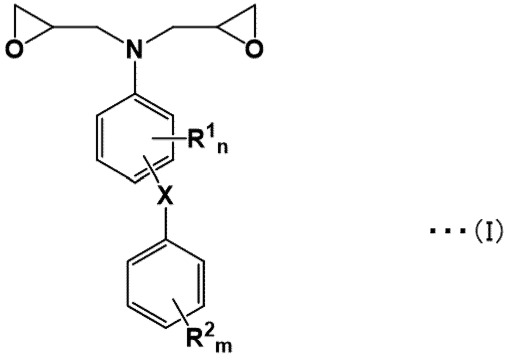 wherein R¹ and R² each represent at least one selected from aliphatic hydrocarbon groups having a carbon number of 1 or more and 4 or less, in a case where a plurality of R¹s are present, the plurality of R¹s are identical or different, in a case where a plurality of R²s are present, the plurality of R²s are identical or different, n is an integer of 0 or more and 4 or less, m is an integer of 0 or more and 5 or less, and X represents -O- or -S-,
the epoxy resin composition for RTM satisfying all of Condition 1 to Condition 4 described below:
Condition 1: in the epoxy resin composition for RTM, a viscosity at 110°C is 1 mPa·s or more and 200 mPa·s or less,
Condition 2: in the epoxy resin composition for RTM, a mass reduction rate after heating the epoxy resin composition for RTM at 110°C for 30 minutes is 0.3 mass% or less,
Condition 3: a cured resin obtained by curing the epoxy resin composition for RTM at 180°C for 2 hours has a rubbery state elastic modulus of 2 MPa or more and 8 MPa or less,
Condition 4: a cured resin obtained by curing the epoxy resin composition for RTM at 180°C for 2 hours has a water absorption coefficient of 1% or more and 3% or less.

## Description

### TECHNICAL FIELD

The present invention relates to an epoxy resin composition for resin transfer molding (RTM) preferably used in aerospace members and general industries, a cured resin, a fiber-reinforced composite material using the cured resin, and a method for producing the fiber-reinforced composite material.

### BACKGROUND ART

Epoxy resin compositions are widely used as matrix resins of fiber-reinforced composite materials by taking advantage of the characteristics of being excellent in high heat resistance, adhesiveness, and mechanical strength. A fiber-reinforced composite material is produced by combining and integrating a reinforcing fiber and a matrix resin, and examples of the method for producing a fiber-reinforced composite material include a method of laminating and molding a prepreg in which a reinforcing fiber and a matrix resin are impregnated in advance, and a method of injecting a matrix resin having a low viscosity into a shaped reinforcing-fiber base material and curing the resin. In general, a method in which a prepreg is used achieves a high mechanical property and therefore has been widely used in the industrial and aircraft fields, but the method has a disadvantage that the production process, which includes preparation and shaping of a prepreg, takes time.

Demand for high productivity is recently increasing in use of structural materials of aircraft, automobiles, and the like, and there is a demand for a technique of producing a large composite material member at high speed and obtaining a fiber-reinforced composite material having a high mechanical property and high heat resistance. Therefore, there is an increasing demand for a fiber-reinforced composite material such that an injection molding method such as resin transfer molding (an RTM method) can be applied and an excellent property is exhibited.

In an injection molding method, a two-component epoxy resin composition is often used from the viewpoint of molding processability. The two-component epoxy resin composition is an epoxy resin composition that includes an epoxy main agent liquid containing an epoxy resin as a main component and a curing agent liquid containing a curing agent as a main component and is obtained by mixing the two liquids, the epoxy main agent liquid and the curing agent liquid, immediately before use. In contrast, a one-component epoxy resin composition refers to an epoxy resin composition in which all the components including a main agent and a curing agent are mixed together.

In an injection molding method, in order to obtain a large fiber-reinforced composite material, a matrix resin used in the injection step needs to have a low viscosity. Furthermore, in order to use a fiber-reinforced composite material in a primary structure for aircraft use or the like, the elastic modulus, the heat resistance, and the fracture toughness at the time of wet heating are desired to be achieved in a well-balanced manner. Examples of a method of reducing the viscosity of a matrix resin while achieving both the elastic modulus and the heat resistance at the time of wet heating include a method in which a polyfunctional and low molecular weight epoxy resin is blended in a large amount, but the resulting cured resin has too high a cross-linking density, and thus such a method has a problem of deterioration of the fracture toughness and deterioration of the impact resistance of a fiber-reinforced composite material. In addition, such a method has a problem that the fiber volume content (Vf) of a molded article decreases due to volatilization of a low molecular weight resin component in the molding step and thus the mechanical properties are less likely to be exhibited. Therefore, development of a resin design technique has been awaited for obtaining a large fiber-reinforced composite material having a high Vf by injection molding without impairing the elastic modulus, the heat resistance, and the fracture toughness at the time of wet heating.

Patent Document 1 describes a technique in which a thermoplastic resin and a core-shell type rubber particle are used in combination at a specific ratio to obtain a cured epoxy resin having high fracture toughness.

Patent Document 2 discloses a technique in which a low-viscosity epoxy resin and a core-shell type rubber particle are contained to achieve both high fracture toughness of a cured resin and a good impregnating property of an epoxy resin composition into a reinforcing-fiber base material in a resin injection step.

Patent Document 3 discloses a technique in which 4,4-methylenebis(isopropyl-6-methylaniline) as a curing agent of an epoxy resin and a core-shell type rubber particle are used in combination to obtain a cured resin having a higher fracture toughness than a cured resin without such combination use.

Patent Document 4 discloses an epoxy resin composition that contains N,N-diglycidyl-4-phenoxyaniline having low volatility and provides a prepreg for obtaining a molded article having few voids, and also describes a general example in which a resin transfer molding method or the like can be used.

### PRIOR ART DOCUMENTS

### PATENT DOCUMENTS

Patent Document 1: Japanese Patent No. 5808057
Patent Document 2: International Publication No. 2021-241734
Patent Document 3: Japanese Patent Laid-open Publication No. 2010-150310
Patent Document 4: International Publication No. 2010-109929

### SUMMARY OF THE INVENTION

### PROBLEMS TO BE SOLVED BY THE INVENTION

The epoxy resin composition described in Patent Document 1 is excellent in fracture toughness of a cured resin obtained by curing the epoxy resin composition, but has a problem of a slow curing reaction due to use of M-CDEA as a curing agent and a long production cycle of a fiber-reinforced composite material. Furthermore, the elastic modulus at the time of wet heating was insufficient.

With the epoxy resin composition described in Patent Document 2, a cured resin having low viscosity and high heat resistance can be obtained in the resin injection step, but the elastic modulus at the time of wet heating is significantly insufficient.

The epoxy resin composition described in Patent Document 3 has a low viscosity and an excellent impregnating property into a reinforcing-fiber base material in the resin injection step, but a cured resin obtained by curing the epoxy resin composition has a remarkably low elastic modulus, and although the fracture toughness is improved, a required level is not reached.

As for the epoxy resin composition described in Patent Document 4, a cured resin obtained by curing the epoxy resin composition has a high water absorption coefficient. At the time of wet heating, the elastic modulus and the glass transition temperature decrease significantly, and in the resin injection step, the viscosity is high and the impregnating property into a reinforcing-fiber base material is poor, so that the epoxy resin composition is difficult to apply to the RTM method.

An object of the present invention is to provide an epoxy resin composition for RTM, a cured resin, and a fiber-reinforced composite material using the cured resin, in which the drawbacks of the prior art are improved.

### SOLUTIONS TO THE PROBLEMS

As a result of intensive studies to solve the above problems, the present inventors have found an epoxy resin composition for RTM having the following configurations, and completed the present invention. That is, the epoxy resin composition for RTM of the present invention has the following configurations.
[1] An epoxy resin composition for resin transfer molding (RTM) including a component [A], a component [B], and a component [C] described below:
   [A] a tetrafunctional glycidyl amine type epoxy resin,
   [B] at least one aromatic amine curing agent selected from the group consisting of an alkylbenzenediamine and a methylenebisaniline,
   [C] an aniline type epoxy resin represented by Formula (I): 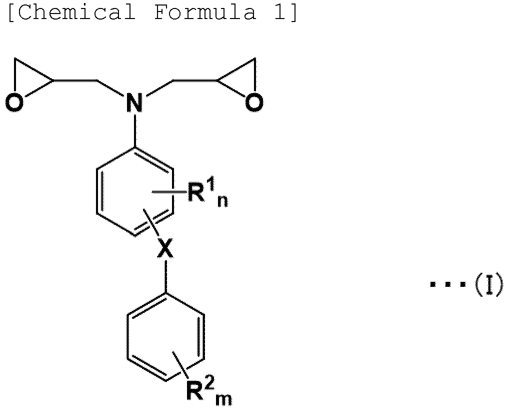
      wherein R¹ and R² each represent at least one selected from aliphatic hydrocarbon groups having a carbon number of 1 or more and 4 or less, in a case where a plurality of R¹s are present, the plurality of R¹s are identical or different, in a case where a plurality of R²s are present, the plurality of R²s are identical or different, n is an integer of 0 or more and 4 or less, m is an integer of 0 or more and 5 or less, and X represents -O- or -S-,
      the epoxy resin composition for RTM satisfying all of Condition 1 to Condition 4 described below:
         Condition 1: in the epoxy resin composition for RTM, a viscosity at 110°C is 1 mPa·s or more and 200 mPa·s or less,
         Condition 2: in the epoxy resin composition for RTM, a mass reduction rate after heating the epoxy resin composition for RTM at 110°C for 30 minutes is 0.3 mass% or less,
         Condition 3: a cured resin obtained by curing the epoxy resin composition for RTM at 180°C for 2 hours has a rubbery state elastic modulus of 2 MPa or more and 8 MPa or less,
         Condition 4: a cured resin obtained by curing the epoxy resin composition for RTM at 180°C for 2 hours has a water absorption coefficient of 1% or more and 3% or less.
[2] The epoxy resin composition for RTM according [1], wherein the component [C] is included in an amount of 10 parts by mass or more and 50 parts by mass or less with respect to 100 parts by mass of a total epoxy resin.
[3] The epoxy resin composition for RTM according to [1] or [2], including a core-shell type rubber particle as a component [D] in an amount of 1 part by mass or more and 10 parts by mass or less with respect to 100 parts by mass of the total epoxy resin.
[4] The epoxy resin composition for RTM according to any one of [1] to [3], including at least one solid epoxy resin as a component [E] in an amount of 10 parts by mass or more and 50 parts by mass or less with respect to 100 parts by mass of the total epoxy resin, the at least one solid epoxy resin selected from the group consisting of dicyclopentadiene type epoxy resins, biphenyl type epoxy resins, phenol aralkyl type epoxy resins, and naphthalene type epoxy resins.
[5] The epoxy resin composition for RTM according to any one of [1] to [4], including both an alkylbenzenediamine and a methylenebisaniline as the component [B].
[6] The epoxy resin composition for RTM according to any one of [1] to [4], wherein the component [B] is an alkylbenzenediamine.
[7] The epoxy resin composition for RTM according to any one of [1] to [6], including dimethylthiotoluenediamine as the alkylbenzenediamine.
[8] The epoxy resin composition for RTM according to any one of [1] to [5] and [7], including 4,4-methylenebis(isopropyl-6-methylaniline) as the methylenebisaniline.
[9] The epoxy resin composition for RTM according to any one of [1] to [8], having a value (Mh/Me) of 0.8 or more and 1.1 or less, the value (Mh/Me) obtained by dividing Mh representing a sum of moles of active hydrogen contained in the component [B] by Me representing a sum of moles of active groups contained in the total epoxy resin.
[10] A cured resin obtained by thermally curing the epoxy resin composition for RTM according to any one of [1] to [9].
[11] A fiber-reinforced composite material including the cured resin according to [10] and a reinforcing-fiber base material.
[12] The fiber-reinforced composite material according to [11], wherein the reinforcing-fiber base material is a carbon fiber base material.
[13] A method for producing a fiber-reinforced composite material, the method including:
   injecting the epoxy resin composition for RTM according to any one of [1] to [9] into a reinforcing-fiber base material disposed in a mold heated to 70°C or more and 190°C or less;
   impregnating the epoxy resin composition for RTM into the reinforcing-fiber base material; and
   curing the epoxy resin composition for RTM in the mold.
[14] The method for producing a fiber-reinforced composite material according to [13], wherein the reinforcing-fiber base material is a carbon fiber base material.

### EFFECTS OF THE INVENTION

According to the present invention, an epoxy resin composition for RTM can be provided that can provide a cured resin excellent in balance among elastic modulus, heat resistance, and fracture toughness in a wet heat environment. The epoxy resin composition for RTM of the present invention has a low viscosity and low volatility in a resin injection step while maintaining the above-described property in the form of a cured resin, and therefore can be suitably used as an epoxy resin composition for RTM suitable for production of a large fiber-reinforced composite material having a high Vf by injection molding.

### EMBODIMENTS OF THE INVENTION

The epoxy resin composition for RTM of the present invention includes, as essential components, [A] a tetrafunctional glycidyl amine type epoxy resin, [B] at least one aromatic amine curing agent selected from the group consisting of an alkylbenzenediamine and a methylenebisaniline, and [C] an aniline type epoxy resin represented by Formula (I). The epoxy resin composition for RTM preferably includes a core-shell type rubber particle as a component [D], and includes at least one solid epoxy resin as a component [E] selected from the group consisting of dicyclopentadiene type epoxy resins, biphenyl type epoxy resins, phenol aralkyl type epoxy resins, and naphthalene type epoxy resins. First, these constituent elements will be described.

### (Component [A])

The epoxy resin composition for RTM of the present invention needs to include a tetrafunctional glycidyl amine type epoxy resin as a component [A]. If the epoxy resin composition for RTM of the present invention includes the component [A], a cured resin obtained by curing the epoxy resin composition for RTM exhibits high heat resistance and has an excellent elastic modulus under wet heating. If the epoxy resin composition for RTM does not include the component [A], the heat resistance of a cured resin obtained by curing the epoxy resin composition is insufficient. The component [A] is preferably included in an amount of 20 parts by mass or more and 80 parts by mass or less, more preferably 40 parts by mass or more and 60 parts by mass or less, and still more preferably 40 parts by mass or more and 50 parts by mass or less with respect to 100 parts by mass of the total epoxy resin. Here, the phrase "the content is 20 parts by mass or more and 80 parts by mass or less with respect to 100 parts by mass of the total epoxy resin" means that the content is 20 parts by mass or more and 80 parts by mass or less when the amount of the total epoxy resin included in the epoxy resin composition for RTM of the present invention is regarded as 100 parts by mass (the same applies to the same expression hereinafter). Here, the total epoxy resin refers to all of the epoxy resin components included in the epoxy resin composition for RTM of the present invention. If the above range is satisfied, a cured epoxy resin having high heat resistance and a high elastic modulus at the time of wet heating can be obtained by curing the epoxy resin composition for RTM of the present invention, and therefore a fiber-reinforced composite material having an excellent compression strength at the time of wet heating can be obtained by using the epoxy resin composition as a matrix resin.

Examples of the component [A] include tetraglycidyl diaminodiphenylmethane and tetraglycidyl diaminodiphenyl sulfone.

Examples of a commercially available product of the tetraglycidyl diaminodiphenylmethane include "SUMI-EPOXY (registered trademark)" ELM-434, "SUMI-EPOXY (registered trademark)" ELM-434VL (both manufactured by SUMITOMO CHEMICAL COMPANY, LIMITED), YH434L (manufactured by NIPPON STEEL Chemical & Material CO., LTD.), "jER (registered trademark)" 604 (manufactured by Mitsubishi Chemical Corporation), "Araldite (registered trademark)" MY720, and "Araldite (registered trademark)" MY721 (both manufactured by Huntsman Japan KK).

Examples of a commercially available product of the tetraglycidyl diaminodiphenyl sulfone include TG3DAS (manufactured by Konishi Chemical Ind. Co., Ltd.).

### (Component [C])

The epoxy resin composition for RTM of the present invention needs to include an aniline type epoxy resin represented by Formula (I) as a component [C]. If the epoxy resin composition for RTM of the present invention includes the component [C], a cured resin obtained by curing the epoxy resin composition for RTM can have a low rubbery state elastic modulus while maintaining the elastic modulus. If the epoxy resin composition for RTM does not include the component [C], the elastic modulus of a cured resin obtained by curing the epoxy resin composition is low. The component [C] is preferably included in an amount of 10 parts by mass or more and 50 parts by mass or less, and more preferably 20 parts by mass or more and 40 parts by mass or less with respect to 100 parts by mass of the total epoxy resin. If the above range is satisfied, a cured epoxy resin having high heat resistance and a high elastic modulus at the time of wet heating can be obtained by curing the epoxy resin composition for RTM of the present invention.

Examples of the component [C] include diglycidyl-p-phenoxyaniline, diglycidyl-4-(4-methylphenoxy)aniline, diglycidyl-4-(4-tert-butylphenoxy)aniline, and diglycidyl-4-(4-phenoxyphenoxy)aniline. Among them, diglycidyl-p-phenoxyaniline (in Formula (I), n = 0, m = 0, X = -O-), which has a small molecular weight, is suitably used in a resin injection step by taking advantage of the property of having a low viscosity.

Examples of a commercially available product of diglycidyl-p-phenoxyaniline include "TOREP (registered trademark)" A-204E (diglycidyl-p-phenoxyaniline) (manufactured by Toray Fine Chemicals Co., Ltd.).

### (Component [D])

The epoxy resin composition for RTM of the present invention preferably includes a core-shell type rubber particle as a component [D] in an amount of 1 part by mass or more and 10 parts by mass or less, and more preferably 3 parts by mass or more and 6 parts by mass or less with respect to 100 parts by mass of the total epoxy resin. If the component [D] is included in the above range, at the time of curing the epoxy resin composition for RTM of the present invention, the elastic modulus of the obtained cured resin is not impaired, and the cured resin can have a higher fracture toughness. Therefore, if the epoxy resin composition for RTM of the present invention is used as a matrix resin, a fiber-reinforced composite material can be obtained that is more excellent in a compression property and impact resistance. If the amount of the component [D] blended is less than 1 part by mass, a sufficient effect of improving the toughness may be not obtained in a resulting cured resin. If the amount of the component [D] blended is more than 10 parts by mass, the epoxy resin composition for RTM may have a high viscosity in a resin injection step, and the resulting cured resin may have a low elastic modulus.

Examples of a usable commercially available product of the component [D] include "Kane Ace (registered trademark)" MX-125", Kane Ace (registered trademark)" MX-150, "Kane Ace (registered trademark)" MX-154, "Kane Ace (registered trademark)" MX-257, "Kane Ace (registered trademark)" MX-267, "Kane Ace (registered trademark)" MX-416, "Kane Ace (registered trademark)" MX-451 (all manufactured by KANEKA CORPORATION), "PARALOID (registered trademark)" EXL-2655, and "PARALOID (registered trademark)" EXL-2668 (both manufactured by Dow Chemical Company).

The resin toughness value of the cured epoxy resin of the present invention can be evaluated, for example, from the K1c value obtained from the SENB test described in ASTM D5045-99.

### (Component [B])

The component [B] in the present invention is at least one aromatic amine curing agent selected from the group consisting of an alkylbenzenediamine and a methylenebisaniline.

The alkylbenzenediamine is an aromatic amine compound including a benzene ring having one or more alkyl groups and two amino groups, and a toluenediamine such as diethyltoluenediamine or dimethylthiotoluenediamine is suitably used. If an alkylbenzenediamine is used as a curing agent of the epoxy resin, a cured resin having an excellent elastic modulus can be obtained while the viscosity of the epoxy resin composition for RTM is suppressed in a resin injection step. Among them, dimethylthiotoluenediamine is particularly preferable in that a cured resin excellent in balance between elastic modulus and toughness can be obtained.

Examples of a commercially available product of the alkylbenzenediamine include "jERcure (registered trademark)" WA (manufactured by Mitsubishi Chemical Corporation), "Ethacure (registered trademark)" 100 (manufactured by Albemarle Corporation), "HARTCURE (registered trademark)" 10 (manufactured by KUMIAI CHEMICAL INDUSTRY CO., LTD.), "Lonzacure (registered trademark)" DETDA80 (manufactured by Lonza K.K.)**,** "Ethacure (registered trademark)" 300 (manufactured by Albemarle Corporation), and "HARTCURE (registered trademark)" 30 (manufactured by KUMIAI CHEMICAL INDUSTRY CO., LTD.).

The methylenebisaniline is an aromatic amine compound in which two aniline compounds are linked by a methylene bridge, and each benzene ring may have various substituents. If a methylenebisaniline is used as a curing agent of an epoxy resin, a cured resin excellent in low water absorption and toughness can be obtained.

Examples of the methylenebisaniline include 4,4-methylenebis(isopropyl-6-methylaniline) (M-MIPA), methylenebis(diethylaniline) (M-DEA), methylenebis(chlorodiethylaniline) (M-CDEA), and methylene(methylethylaniline)-(chlorodiethylaniline) (M-MEACDEA). Among them, 4,4-methylenebis(isopropyl-6-methylaniline) is particularly preferable in that a cured resin excellent in balance between elastic modulus and toughness can be obtained.

Examples of a commercially available product of the methylenebisaniline include MDA-220 (manufactured by Mitsui Chemicals, Inc.), "Lonzacure (registered trademark)" M-MIPA, "Lonzacure (registered trademark)" M-DEA, "Lonzacure (registered trademark)" M-CDEA, "Lonzacure (registered trademark)" M-DIPA (all manufactured by Lonza K.K.), and "KAYAHARD (registered trademark)" A-A (PT) (manufactured by Nippon Kayaku Co., Ltd.).

The component [B] in the present invention is preferably an alkylbenzenediamine, and it is also preferable that both an alkylbenzenediamine and a methylenebisaniline be included as the component [B].

A case where the component [B] in the present invention is an alkylbenzenediamine is preferable in that a cured resin having an excellent elastic modulus can be obtained while the viscosity of the epoxy resin composition for RTM is sufficiently suppressed in a resin injection step.

Meanwhile, a case where both an alkylbenzenediamine and a methylenebisaniline are included as the component [B] in the present invention is preferable in that a cured resin excellent in balance among elastic modulus, low water absorption, and toughness can be obtained while the viscosity of the epoxy resin composition for RTM is suppressed in a resin injection step.

In the present invention, the component [B] is preferably liquid at 23°C. If the component [B] is liquid, the viscosity of the epoxy resin composition for RTM of the present invention can be reduced, and the epoxy resin composition for RTM can be suitably used for injection molding of a fiber-reinforced composite material.

### (Component [E])

In the present invention, the epoxy resin composition for RTM preferably includes at least one solid epoxy resin as a component [E] selected from the group consisting of dicyclopentadiene type epoxy resins, biphenyl type epoxy resins, phenol aralkyl type epoxy resins, and naphthalene type epoxy resins, in an amount of 10 parts by mass or more and 50 parts by mass or less and more preferably 20 parts by mass or more and 40 parts by mass or less. If the component [E] is included within the above range, the water absorption coefficient of the cured epoxy resin can be reduced, so that the elastic modulus under wet heating can be enhanced.

An epoxy resin having a skeleton that can be classified as a dicyclopentadiene type epoxy resin, a biphenyl type epoxy resin, a phenol aralkyl type epoxy resin, or a naphthalene type epoxy resin usable as the component [E] and, at the same time, can correspond to the component [A] or the component [C] is treated as the component [A] or the component [C].

As the component [E], a dicyclopentadiene type epoxy resin and a naphthalene type epoxy resin are preferably used from the viewpoint of excellent balance between elastic modulus and toughness. A dicyclopentadiene type epoxy resin is particularly preferably used. In addition to the effect of reducing the water absorption coefficient of the cured epoxy resin, the fracture toughness of the cured resin can be enhanced.

Examples of a commercially available product of the dicyclopentadiene type epoxy resin usable as the component [E] include "EPICLON (registered trademark)" HP-7200L, "EPICLON (registered trademark)" HP-7200, "EPICLON (registered trademark)" HP-7200H, and "EPICLON (registered trademark)" HP-7200HH (all manufactured by DIC Corporation).

Examples of a commercially available product of the biphenyl type epoxy resin usable as the component [E] include "jER (registered trademark)" YX-4000 (manufactured by Mitsubishi Chemical Corporation).

Examples of a commercially available product of the phenol aralkyl type epoxy resin usable as the component [E] include NC-3000H, NC-3000, NC-3000L, NC-7000, NC-7300, NC-2000, and NC-2000L (all manufactured by Nippon Kayaku Co., Ltd.) .

Examples of a commercially available product of the naphthalene type epoxy resin usable as the component [E] include "EPICLON (registered trademark)" HP-4770 and "EPICLON (registered trademark)" HP-4700 (both manufactured by DIC Corporation).

The epoxy resin composition for RTM of the present invention needs to satisfy all of Conditions 1 to 4 described below:
Condition 1: in the epoxy resin composition for RTM, a viscosity at 110°C is 1 mPa·s or more and 200 mPa·s or less,
Condition 2: in the epoxy resin composition for RTM, a mass reduction rate after heating the epoxy resin composition for RTM at 110°C for 30 minutes is 0.3 mass% or less,
Condition 3: a cured resin obtained by curing the epoxy resin composition for RTM at 180°C for 2 hours has a rubbery state elastic modulus of 2 MPa or more and 8 MPa or less,
Condition 4: a cured resin obtained by curing the epoxy resin composition for RTM at 180°C for 2 hours has a water absorption coefficient of 1% or more and 3% or less.

In Condition 1, the epoxy resin composition for RTM of the present invention needs to have a viscosity at 110°C of 1 mPa ·s or more and 200 mPa ·s or less, and the viscosity is preferably 2 mPa ·s or more and 100 mPa ·s or less, more preferably 5 mPa ·s or more and 45 mPa ·s or less, and still more preferably 5 mPa ·s or more and 40 mPa ·s or less. Within such a range, the epoxy resin composition for RTM has an excellent impregnating property into a reinforcing-fiber base material in a resin injection step, so that the epoxy resin composition for RTM of the present invention can be suitably used in a large structural material.

The viscosity of the epoxy resin composition for RTM is measured using a dynamic viscoelasticity device under the conditions of a measurement mode: parallel plate (25 mmϕ, gap: 1.0 mm) , a shear speed of 100 s⁻¹, and a set temperature of 110°C. At this time, the epoxy resin composition is set within 5 minutes after preparation on a parallel plate heated to 110°C so that the gap is 1.0 mm, and measurement is started. The complex viscosity at the time when the sample temperature rises to 110°C is regarded as η₀.

In Condition 2, the epoxy resin composition for RTM of the present invention needs to have a mass reduction rate of 0.3 mass% or less after heating the epoxy resin composition for RTM at 110°C for 30 minutes, and the mass reduction rate is preferably 0.2 mass% or less, and more preferably 0.15 mass% or less. Within such a range, volatilization of the resin component in a molding step is suppressed, so that a fiber-reinforced composite material having a high Vf is obtained, and an excellent mechanical property is exhibited.

The mass reduction rate of the epoxy resin composition for RTM is obtained as follows. About 2 g of the epoxy resin composition is put into an aluminum cup having an inner diameter of 50 mm, weighed with an electronic balance, then heated in a blower oven set at 110°C, taken out after 30 minutes, cooled to normal temperature, and then weighed again, and the mass reduction rate of the resin is calculated.

In Condition 3, the epoxy resin composition for RTM of the present invention needs to satisfy that a cured resin obtained by curing the epoxy resin composition at 180°C for 2 hours has a rubbery state elastic modulus in the range of 2 MPa or more and 8 MPa or less, and the rubbery state elastic modulus is preferably in the range of 2 MPa or more and 6 MPa or less, and more preferably in the range of 2 MPa or more and 5 MPa or less. Within such a range, a cured resin obtained by curing the epoxy resin composition for RTM of the present invention exhibits excellent fracture toughness while maintaining the elastic modulus and the heat resistance, so that a fiber-reinforced composite material obtained by using the epoxy resin composition as a matrix resin has excellent impact resistance. If the rubbery state elastic modulus is more than 8 MPa, the above effect cannot be obtained. If the rubbery state elastic modulus is less than 2 MPa, the fracture toughness is improved, but the elastic modulus and the heat resistance of the cured epoxy resin deteriorate, resulting in deterioration of, for example, the compression strength at the time of wet heating in the fiber-reinforced composite material.

The rubbery state elastic modulus of the cured resin is obtained as follows. Using a dynamic viscoelasticity measurement device, a test piece having a thickness of 2.0 mm, a width of 12.7 mm, and a length of 45 mm is set on a solid twisting jig, and the rubbery state elastic modulus is measured at a temperature ramp rate of 5°C/min, a frequency of 1 Hz, and a strain amount of 0.08% in a temperature range of 40°C or more and 260°C or less. In the obtained graph of the storage modulus and the temperature, the storage modulus at a temperature higher than the glass transition temperature by 50°C is regarded as the rubbery state elastic modulus. In the obtained graph of the storage modulus and the temperature, the temperature at the intersection of the tangent line drawn in the glass region and the tangent line drawn in the glass transition temperature region is regarded as the glass transition temperature.

In Condition 4, the epoxy resin composition for RTM of the present invention needs to satisfy that a cured resin obtained by curing the epoxy resin composition at 180°C for 2 hours has a water absorption coefficient in the range of 1% or more and 3% or less, and the water absorption coefficient is preferably in the range of 1% or more and 2.5% or less, more preferably in the range of 1.5% or more and 2.2% or less, and still more preferably in the range of 1.5% or more and 1.9% or less. Within such a range, a cured resin obtained by curing the epoxy resin composition for RTM of the present invention has a high elastic modulus at the time wet heating, so that a fiber-reinforced composite material obtained by using the epoxy resin composition as a matrix resin has an excellent compression strength. If the water absorption coefficient is more than 3%, the above effect cannot be obtained. If the water absorption coefficient is less than 1%, in the fiber-reinforced composite material, the adhesiveness between the cured epoxy resin and the reinforcing fiber deteriorates, so that the impact resistance of the fiber-reinforced composite material deteriorates.

The water absorption coefficient of the cured resin is obtained by immersing a test piece having a thickness of 2.0 mm, a width of 10 mm, and a length of 60 mm in boiling water for 48 hours and calculating the difference in mass between before and after the immersion.

The value (Mh/Me) obtained by dividing Mh representing the sum of moles of active hydrogen in the component [B] included in the epoxy resin composition for RTM of the present invention by Me representing the sum of moles of active epoxy groups contained in the total epoxy resin is preferably in the range of 0.8 or more and 1.1 or less, and more preferably in the range of 0.9 or more and 1.0 or less. Here, the total epoxy resin refers to all of the epoxy resin components included in the epoxy resin composition for RTM of the present invention. If the value (Mh/Me) is within the above range, at the time of curing the epoxy resin composition for RTM of the present invention, a reaction between the epoxy resin and the curing agent occur efficiently to reduce the water absorption coefficient of the cured resin, so that the cured resin has a high elastic modulus under wet heating, and in the case of using the epoxy resin composition for RTM as a matrix resin, a fiber-reinforced composite material is obtained that exhibits a higher compression property at the time of wet heating. In addition, the heat resistance after wetting is also excellent, and therefore the fiber-reinforced composite material is suitably used for a structural material.

The sum of moles of active epoxy groups contained in the total epoxy resin (Me) is the sum of moles of epoxy resin active groups contained in the epoxy resin composition for RTM, and is represented by the following formula. Me = (mass of epoxy resin A/epoxy equivalent weight of epoxy resin A) + (mass of epoxy resin B/epoxy equivalent weight of epoxy resin B) + ... + (mass of epoxy resin W/epoxy equivalent weight of epoxy resin W)

The sum of moles of active hydrogen (Mh) in the component [B] is determined by dividing the mass of the component [B] included in the epoxy resin composition for RTM by the active hydrogen equivalent weight of the component [B]. The sum of moles of active hydrogen (Mh) is represented by the following formula. Mh = (mass of component [B]1/active hydrogen equivalent weight of component [B]1) + (mass of component [B]2/active hydrogen equivalent weight of component [B]2) + ... + (mass of component [B]n/active hydrogen equivalent weight of component [B]n).

Here, the epoxy resin composition for RTM of the present invention has a characteristic such that a cured resin obtained by curing the epoxy resin composition at 180°C for 120 minutes has a smaller degree of decrease in the heat resistance at the time of wetting (wet Tg) than in the heat resistance at the time of drying (dry Tg). In the case of applying a fiber-reinforced composite material as a structural material typified by a structural material for an aircraft, a smaller decrease in wet Tg is more preferable. As an index of a decrease in wet Tg, the decrease rate can be expressed with the ratio of wet Tg to dry Tg (wet Tg/dry Tg), and wet Tg/dry Tg is preferably in the range of 0.9 or more and 1.0 or less, and more preferably 0.93 or more and 1.0 or less. Wet Tg can be evaluated, for example, by DMA measurement described below using a test piece obtained by immersing a cured resin in boiling water for 48 hours.

The glass transition temperature (Tg) of the cured resin of the present invention can be calculated from the scatter diagram of the storage modulus and the temperature that are obtained by performing temperature rise measurement by dynamic viscoelasticity measurement (DMA measurement). The glass transition temperature is the temperature at the intersection of the tangent line drawn in the glass region and the tangent line drawn in the glass transition region in the above-described scatter diagram. The storage modulus in a rubber region (rubbery state elastic modulus) is the storage modulus at a temperature higher than the glass transition temperature by 50°C.

The epoxy resin composition for RTM of the present invention also has a characteristic such that a cured resin obtained by curing the epoxy resin composition at 180°C for 120 minutes has a smaller degree of decrease in the flexural modulus at 82°C under wet condition (E₈₂) than in the flexural modulus at 23°C and 50% RH (E₂₃). As an index thereof, the decrease rate can be expressed with the ratio of E₈₂ to E₂₃ (E₈₂/E₂₃), and E₈₂/E₂₃ is preferably 0.75 or more, more preferably 0.80 or more, and still more preferably 0.85 or more.

In the epoxy resin composition for RTM used in the present invention, an epoxy resin different from the components [A], [C], [E] may be used as a component [F] as long as an effect of the present invention is not lost.

Examples of the epoxy resin include bisphenol A type epoxy resins, bisphenol F type epoxy resins, phenol novolac type epoxy resins, and triglycidyl aminophenol type epoxy resins. These epoxy resins may be used singly, or in combination of two or more kinds thereof.

Examples of commercially available products of the bisphenol A type epoxy resins include "jER (registered trademark)" 828 and "jER (registered trademark)" 825 (both manufactured by Mitsubishi Chemical Corporation).

Examples of commercially available products of the bisphenol F type epoxy resins include "EPICLON (registered trademark)" 830, "EPICLON (registered trademark)" 807 (both manufactured by DIC Corporation), and "jER (registered trademark)" 806 (manufactured by Mitsubishi Chemical Corporation).

Examples of commercially available products of the phenol novolac type epoxy resins include "jER (registered trademark)" 152, "jER (registered trademark)" 154, and "jER (registered trademark)" 180S (all manufactured by Mitsubishi Chemical Corporation).

Examples of commercially available products of the triglycidyl aminophenol type epoxy resins include "SUMI-EPOXY (registered trademark)" ELM100, ELM120 (manufactured by Sumitomo Chemical Industry Company Limited), "Araldite (registered trademark)" MY0500, "Araldite (registered trademark)" MY0510, "Araldite (registered trademark)" MY0600 (all manufactured by Huntsman Advanced Materials LLC.), and "jER (registered trademark)" 630 (manufactured by Mitsubishi Chemical Corporation).

The epoxy resin composition for RTM of the present invention may be prepared by kneading using a machine such as a kneader, a planetary mixer, a triple roll mil, or a twin screw extruder, or by mixing by hand using a beaker and a spatula, or the like as long as uniform kneading is possible.

The epoxy resin composition for RTM of the present invention exhibits the viscosity stability at a relatively high temperature for a long time and has an excellent property of impregnation into a reinforcing-fiber base material, and therefore is particularly suitably used in an RTM method. The RTM method is a method in which a reinforcing-fiber base material or a preform is placed in a mold, a liquid matrix resin is injected into the mold, impregnated into the reinforcing fiber, and then heated to cure the epoxy resin composition, and thus a fiber-reinforced composite material as a molded article is obtained. In the method for producing a fiber-reinforced composite material using the epoxy resin composition for RTM of the present invention, the temperature at the time of injecting the matrix resin is not particularly limited, and it is preferable that a reinforcing-fiber base material be disposed in a mold heated to 70°C to 190°C in advance and the epoxy resin composition for RTM of the present invention be injected. Heating the mold in advance reduces the viscosity of the epoxy resin composition to shorten the injection time, resulting in excellent mass productivity. The thermal curing temperature is not required to be the same as the temperature at the time of injection, and the temperature may be appropriately raised to shorten the time required for thermal curing.

In the present invention, as the mold used in the RTM method, a closed mold including a rigid material may be used, and an open mold including a rigid material and a flexible film (bag) may also be used. In the latter case, a reinforcing-fiber base material can be placed between an open mold including a rigid material and a flexible film. As the rigid material, various existing materials are used such as metals such as steel and aluminum, fiber-reinforced plastic (FRP), wood, and gypsum. As the material of the flexible film, polyamides, polyimides, polyesters, fluororesins, silicone resins, and the like are used.

The reinforcing fiber used in the reinforcing-fiber base material used in the fiber-reinforced composite material of the present invention is not particularly limited. The reinforcing fiber used in the present invention is not particularly limited, and examples of the usable reinforcing fiber include glass fibers, carbon fibers, aramid fibers, boron fibers, alumina fibers, and silicon carbide fibers. Two or more kinds of these fibers may be mixed and used. From the viewpoint of obtaining a lightweight and highly rigid fiber-reinforced composite material, carbon fibers are preferably used.

The fiber-reinforced composite material of the present invention is excellent in a mechanical property, compression strength at the time of wet heating, and impact resistance, and therefore can be preferably used in many structural materials such as aircraft members such as fuselages, main wings, tail wings, moving wings, fairings, cowls, doors, seats, and interior materials, spacecraft members such as motor cases and main wings, artificial satellite members such as body structures and antennas, automobile members such as outer plates, chassis, aerodynamic members, and seats, railway vehicle members such as body structures and seats, and ship members such as hulls and seats.

### EXAMPLES

Hereinafter, the present invention will be described more specifically with reference to Examples, but the present invention is not limited to the description in Examples.

The materials, the method of preparing samples and the like, and the evaluation method used in the present Examples are as follows.

### <Materials used>

(1) Component [A]: Tetrafunctional glycidyl amine type epoxy resin
   [A]-1 "SUMI-EPOXY (registered trademark)" ELM434VL (manufactured by SUMITOMO CHEMICAL COMPANY, LIMITED, epoxy equivalent weight: 115 g/eq),
   [A]-2 "Araldite (registered trademark)" MY721 (manufactured by Huntsman Japan KK., epoxy equivalent weight: 115 g/eq),
   [A]-3 "SUMI-EPOXY (registered trademark)" ELM434 (manufactured by SUMITOMO CHEMICAL COMPANY, LIMITED, epoxy equivalent weight: 120 g/eq).
(2) Component [B]: At least one aromatic amine curing agent selected from the group consisting of an alkylbenzenediamine and a methylenebisaniline,
   (2-1) Alkylbenzenediamine
      [B]-1: "jERcure (registered trademark)" WA (manufactured by Mitsubishi Chemical Corporation, active hydrogen equivalent weight: 45 g/eq),
      [B]-2: "Ethacure (registered trademark)" 300 (manufactured by Albemarle Corporation, active hydrogen equivalent weight: 54 g/eq),
   (2-2) Methylenebisaniline
      [B]-3: "Lonzacure (registered trademark)" M-MIPA (manufactured by Lonza K.K., active hydrogen equivalent weight: 78 g/eq),
      [B]-4: "Lonzacure (registered trademark)" M-CDEA (manufactured by Lonza K.K., active hydrogen equivalent weight: 95 g/eq).
(3) Component [D]: Mixture of core-shell type rubber particle and component [A] or component [F]
   [D]-1 "Kane Ace (registered trademark)" MX-416 (75 mass% of glycidyl amine type epoxy resin (corresponding to component [A]) and 25 mass% of butadiene-based core-shell type rubber particle, epoxy equivalent weight: 148 g/eq),
   [D]-2 "Kane Ace (registered trademark)" MX-267 (63 mass% of bisphenol F type epoxy resin (corresponding to component [F]) and 37 mass% of butadiene-based core-shell type rubber particle, epoxy equivalent weight: 270 g/eq) (all manufactured by KANEKA CORPORATION).
(4) Component [C]: Glycidylaniline type epoxy resin represented by Formula (I)
   "TOREP (registered trademark)" A-204E (manufactured by Toray Fine Chemicals Co., Ltd., epoxy equivalent weight: 162 g/eq).
(5) Component [E]: At least one solid epoxy resin selected from the group consisting of dicyclopentadiene type epoxy resins, biphenyl type epoxy resins, phenol aralkyl type epoxy resins, and naphthalene type epoxy resins
   (5-1) Dicyclopentadiene type epoxy resin
      [E]-1 "EPICLON (registered trademark)" HP-7200L (manufactured by DIC Corporation, epoxy equivalent weight: 246 g/eq),
      [E]-2 "EPICLON (registered trademark)" HP-7200H (manufactured by DIC Corporation, epoxy equivalent weight: 278 g/eq),
   (5-2) Biphenyl type epoxy resin
      [E]-3 "jER (registered trademark)" YX-4000 (manufactured by Mitsubishi Chemical Corporation, epoxy equivalent weight: 186 g/eq),
   (5-3) Phenol aralkyl type epoxy resin
      [E]-4 NC-3000L (manufactured by Nippon Kayaku Co., Ltd., epoxy equivalent weight: 272 g/eq).
(6) Component [F]: Another epoxy resin
   [F]-1 GAN (manufactured by Nippon Kayaku Co., Ltd., epoxy equivalent weight: 125 g/eq),
   [F]-2 "jER (registered trademark)" 828 (manufactured by Mitsubishi Chemical Corporation, epoxy equivalent weight: 189 g/eq),
   [F]-3 "EPICLON (registered trademark)" 830 (manufactured by DIC Corporation, epoxy equivalent weight: 171 g/eq),
   [F]-4 "jER (registered trademark)" 630 (manufactured by Mitsubishi Chemical Corporation, epoxy equivalent weight: 98 g/eq).
(7) Another curing agent component
   [G]-1: "SEIKACURE (registered trademark)" S (manufactured by Wakayama Seika Kogyo Co., Ltd., active hydrogen equivalent weight: 62 g/eq).

### <Method of Preparing Epoxy Resin Composition for RTM>

Predetermined amounts of components other than a component [B] and another curing agent component were put into a stainless steel beaker, heated to a temperature of 60 to 150°C, and appropriately kneaded until the components were compatible to obtain an epoxy main agent liquid.

The component [B] and another curing agent component were added into another container, and heated as necessary to be compatible, and thus a curing agent liquid was obtained.

Predetermined amounts of the epoxy main agent liquid and the curing agent liquid were mixed at about 60°C and kneaded with a planetary mixer for 3 minutes to obtain an epoxy resin composition for RTM. The composition is as shown in Tables 1 to 4.

### <Method of Preparing Fiber-Reinforced Composite Material>

### (1) Preparation of Reinforcing-Fiber Base Material with Nonwoven Fabric

A nonwoven fabric (fiber areal weight: 6 g/m²) including polyamide 12 was attached to one surface of a plain woven fabric (fiber areal weight: 285 g/m²) including a carbon fiber "Torayca (registered trademark)" T700G-12K-31E as a reinforcing fiber. Then, the nonwoven fabric was fused using a far-infrared heater to obtain a reinforcing-fiber base material with a nonwoven fabric in which the nonwoven fabric is provided on one surface of the reinforcing-fiber base material.

### (2) Preparation of Fiber-Reinforced Composite Material

The reinforcing-fiber base material with a nonwoven fabric obtained in accordance with (1) Preparation of Reinforcing-Fiber Base Material with Nonwoven Fabric described above was cut into 400 mm × 400 mm so as to have fiber directions of 0°/90° and 45°/-45°. The reinforcing-fiber base material with a nonwoven fabric cut out into a mold was laminated in a configuration of [(45°/- 45°)/(0°/90°) ]4s. Subsequently, the mold was heated to 110°C, and the epoxy resin composition obtained in accordance with <Method of Preparing Epoxy Resin Composition> described above was separately heated to 110°C in advance and injected into the mold. Thereafter, the temperature was raised to 180°C at a rate of 1.5 °C/min, and the epoxy resin composition was cured at 180°C for 2 hours to obtain a fiber-reinforced composite material.

### <Evaluation Methods>

Hereinafter, the evaluation method in Examples will be described. In the evaluation method, description of the number of times of measurement is omitted in a case where the number n is 1.

### (1) Method of Evaluating Viscosity of Epoxy Resin Composition for RTM at 110°C (η₀)

The epoxy resin composition for RTM obtained in accordance with <Method of Preparing Epoxy Resin Composition for RTM> described above was set in the following device within 5 minutes after mixing on a parallel plate set at 110°C so that the gap was 1.0 mm, measurement was started under the following conditions, and the complex viscosity when the temperature of the epoxy resin composition for RTM reached 110°C was regarded as η₀.
Measurement device: Dynamic viscoelasticity measurement device (Discovery HR-2, manufactured by TA Instruments)
Measurement mode: Parallel plate (25 mmϕ, gap: 1.0 mm)
Shear speed: 100s⁻¹
Set temperature: 110°C.

### (2) Method of Evaluating Mass Reduction Rate of Epoxy Resin Composition for RTM at 110°C

About 2 g of the epoxy resin composition for RTM obtained in accordance with <Method of Preparing Epoxy Resin Composition for RTM> described above was put into an aluminum cup having an inner diameter of 50 mm, weighed with an electronic balance, then heated in a blower oven (DKM400, manufactured by Yamato Scientific Co., Ltd.) set at 110°C, taken out after 30 minutes, cooled to normal temperature, and then weighed again, and the mass reduction rate of the resin was calculated. The number of samples was n = 5, and the average of the samples was adopted as the mass reduction rate value.

### (3) Method of Evaluating Flexural Modulus (23°C, 50% RH): E₂₃ of Cured Resin

The epoxy resin composition for RTM obtained in accordance with <Method of Preparing Epoxy Resin Composition for RTM> described above was defoamed in vacuum, and then cured at a temperature of 180°C for 2 hours in a mold set to have a thickness of 2 mm with a 2 mm thick "TEFLON (registered trademark)" spacer, and thus a plate-shaped cured resin having a thickness of 2 mm was obtained. From the cured resin, a test piece having a width of 10 mm and a length of 60 mm was cut out, 3-point bending was performed using an Instron universal testing machine (manufactured by Instron) with a span of 32 mm at a crosshead speed of 10 mm/min in accordance with JIS K7171 (1994) under a room temperature environment (23°C, 50% RH), and thus the flexural modulus (23°C, 50% RH) was measured. The number of samples was n = 6, and the average of these samples was adopted as the flexural modulus value.

### (4) Method of Evaluating Flexural Modulus (82°C under wet condition): E₈₂ and Water Absorption Coefficient of Cured Resin

A cured resin was obtained in the same manner as in (3) Method of Evaluating Flexural Modulus (23°C, 50% RH): E₂₃ of Cured Resin described above, and a test piece having a width of 10 mm and a length of 60 mm was cut out, and then immersed in boiling water for 48 hours. The taken-out test piece was subjected to 3-point bending using an Instron universal testing machine (manufactured by Instron) with a span of 32 mm at a crosshead speed of 10 mm/min in accordance with JIS K7171 (1994) under a high temperature environment (82°C), and thus the flexural modulus (82°C under wet condition) was measured. The mass of the test piece was measured before and after the immersion in boiling water for 48 hours, and the water absorption coefficient was calculated from the difference in mass. The number of samples was n = 6, and the average of these samples was adopted as the flexural modulus value.

### (5) Method of Evaluating Glass Transition Temperature (Dry Tg) of Cured Resin

The epoxy resin composition for RTM obtained in accordance with <Method of Preparing Epoxy Resin Composition for RTM> described above was defoamed in an uncured state in vacuum, and then cured at a temperature of 180°C for 2 hours in a mold set to have a thickness of 2 mm with a 2 mm thick "TEFLON (registered trademark)" spacer, and thus a plate-shaped cured resin having a thickness of 2 mm was obtained. From the cured resin, a test piece having a width of 12.7 mm and a length of 45 mm was cut out and set on a solid twisting jig at an inter-chunk distance of 30 mm, the test piece was set on the solid twisting jig, and measurement was performed using a dynamic viscoelasticity measurement device (ARES-G2, manufactured by TA Instruments) at a temperature ramp rate of 5°C/min, a frequency of 1 Hz, and a strain amount of 0.08% in a temperature range of 40 to 260°C. At this time, in the obtained graph of the storage modulus and the temperature, the temperature at the intersection of the tangent line drawn in the glass region and the tangent line drawn in the glass transition temperature region was regarded as the glass transition temperature (dry Tg). In the obtained graph of the storage modulus and the temperature, the storage modulus at a temperature higher than the glass transition temperature by 50°C was regarded as the rubbery state elastic modulus.

### (6) Method of Evaluating Glass Transition Temperature (Wet Tg) of Cured Resin

A cured resin was obtained in the same manner as in (5) Method of Evaluating Glass Transition Temperature (Dry Tg) of Cured Resin described above, and a test piece having a width of 12.7 mm and a length of 45 mm was cut out, and then immersed in boiling water for 48 hours. The viscoelasticity was measured in the same manner as in <Method of Evaluating Glass Transition Temperature (Dry Tg) of Cured Resin described above, and thus the glass transition temperature (wet Tg) was obtained.

### (7) Method of Evaluating Fracture Toughness Value of Cured Resin

The epoxy resin composition for RTM obtained in accordance with <Method of Preparing Epoxy Resin Composition for RTM> described above was defoamed in vacuum, and then cured at a temperature of 180°C for 2 hours in a mold set to have a thickness of 6 mm with a 6 mm thick "TEFLON (registered trademark)" spacer, and thus a plate-shaped cured resin having a thickness of 6 mm was obtained. The obtained cured resin was processed into a test piece shape described in ASTM D5045-99, and then subjected to an SENB test in accordance with ASTM D5045-99. The number of samples was n = 16, and the average of the samples was adopted as the fracture toughness value K1c value.

### (8) Method of Evaluating Open Hole Compression (23°C, 50% RH): OHC₂₃ of Fiber-Reinforced Composite Material

From the fiber-reinforced composite material obtained in accordance with <Preparation of Fiber-Reinforced Composite Material> described above, a rectangular piece having a length of 304.8 mm in the 0° direction and 38.1 mm in the 90° direction was cut out, and a circular hole having a diameter of 6.35 mm was bored in the piece at the center to obtain a test piece. The open hole compression (23°C, 50% RH) of this test piece was measured using an Instron universal testing machine (manufactured by Instron) in accordance with ASTM-D6484 under a room temperature environment (23°C, 50% RH). The number of samples was n = 5, and the average of the samples was adopted as the OHC₂₃ value.

### (9) Method of Evaluating Open Hole Compression (82°C under wet condition): OHC₈₂ of Fiber-Reinforced Composite Material

A test piece was obtained in the same manner as in (8) Method of Evaluating Open Hole Compression (23°C, 50% RH) of Fiber-Reinforced Composite Material described above. This test piece was immersed in hot water at 72°C for 14 days, and then the open hole compression (82°C under wet condition) was measured using an Instron universal testing machine (manufactured by Instron) in accordance with ASTM-D6484 under a high temperature environment (82°C). The number of samples was n = 5, and the average of the samples was adopted as the OHC₈₂ value.

### (10) Method of Evaluating Compression Strength after Impact (CAI) of Fiber-Reinforced Composite Material

From the fiber-reinforced composite material obtained in accordance with <Preparation of Fiber-Reinforced Composite Material> described above, a rectangular piece having a length of 150 mm in the 0° direction and 100 mm in the 90° direction was cut out to obtain a test piece. For this test piece, a falling water impact of 6.7 J/mm was applied to the center of the test piece in accordance with JIS K7089 (1996), and the compression strength after impact was measured using an Instron universal testing machine (manufactured by Instron) in accordance with JIS K7089 (1996). The number of samples was n = 5, and the average of the samples was adopted as the CAI value.

Hereinafter, the method of preparing a sample, the cured resin properties, and the measurement results of the uncured resin properties in each Example will be described.

### (Example 1)

An epoxy resin composition for RTM was prepared in accordance with <Method of Preparing Epoxy Resin Composition for RTM> described above using, as an epoxy resin, 25 parts by mass of "SUMI-EPOXY (registered trademark)" ELM-434VL (component [A]), 30 parts by mass of "TOREP (registered trademark)" A-204E (component [C]), 30 parts by mass of "EPICLON (registered trademark)" HP-7200H (component [E]), 20 parts by mass of "Kane Ace (registered trademark)" MX-416 (5 parts by mass of component [D] and 15 parts by mass of component [A]), 9.5 parts by mass of "jERcure (registered trademark)" WA (component [B]), and 28.4 parts by mass of "Lonzacure (registered trademark)" M-MIPA (component [B]).

The flexural property of this epoxy resin composition for RTM was acquired in accordance with (3) Method of Evaluating Flexural Modulus (23°C, 50% RH): E₂₃ of Cured Resin and (4) Method of Evaluating Flexural Modulus (82°C under wet condition): E₈₂ and Water Absorption Coefficient of Cured Resin described above. As a result, E₂₃ was 3.75 GPa, E₈₂ was 3.20 GPa, and E₈₂/E₂₃ was 0.85, showing an excellent elastic modulus under wet heating. The heat resistance was evaluated in accordance with (5) Method of Evaluating Glass Transition Temperature (Dry Tg) of Cured Resin and (6) Method of Evaluating Glass Transition Temperature (Wet Tg) of Cured Resin described above. As a result, dry Tg was 178°C, wet Tg was 170°C, and wet Tg/dry Tg was 0.96, showing excellent heat resistance. In addition, a very good water absorption coefficient of 1.7% was exhibited, and the rubbery state elastic modulus was 4.2 MPa. The fracture toughness value was evaluated in accordance with (7) Method of Evaluating Fracture Toughness Value of Cured Resin described above. As a result, a good fracture toughness value of 1.2 MPa·m^{0.5} was exhibited.

As for the viscosity, η₀ was evaluated in accordance with (1) Method of Evaluating Viscosity of Epoxy Resin Composition for RTM at 110°C (η₀) described above. As a result, η₀ was 40 mPa·s. The mass reduction rate was evaluated in accordance with (2) Method of Evaluating Mass Reduction Rate of Epoxy Resin Composition for RTM at 110°C described above. As a result, the mass reduction rate was 0.12 mass%.

### (Examples 2 to 21)

Epoxy resin compositions for RTM and cured resins were prepared in the same manner as in Example 1 except that the resin composition was changed as shown in Tables 1 to 3.

As a result of evaluating the elastic modulus under wet heating and the elastic modulus at room temperature, wet Tg and dry Tg, the water absorption coefficient, and the fracture toughness value of the epoxy resin composition for RTM of each Example, good physical properties were obtained at all levels. In each Example, η₀ was within a range of 18 mPa·s or more and 50 mPa·s or less, the mass reduction rate was within a range of 0.07 mass% or more and 0.20 mass% or less, and the rubbery state elastic modulus was within a range of 3.5 MPa or more and 8.0 MPa or less.

### (Comparative Example 1)

For the resin composition shown in Table 4, an epoxy resin composition for RTM was prepared with the method described in Example 2 of Patent Document 1 (Japanese Patent No. 5808057). The curing agent (M-CDEA) of the epoxy resin composition was solid.

The flexural property of this epoxy resin composition for RTM was acquired in accordance with (3) Method of Evaluating Flexural Modulus (23°C, 50% RH): E₂₃ of Cured Resin and (4) Method of Evaluating Flexural Modulus (82°C under wet condition): E₈₂ and Water Absorption Coefficient of Cured Resin described above. As a result, E₂₃ was as high as 3.80 GPa, but E₈₂ was 2.60 GPa and thus was remarkably low, and E₈₂/E₂₃ was 0.68. The heat resistance was evaluated in accordance with (5) Method of Evaluating Glass Transition Temperature (Dry Tg) of Cured Resin and (6) Method of Evaluating Glass Transition Temperature (Wet Tg) of Cured Resin described above. As a result, dry Tg was 175°C, wet Tg was 155°C, and wet Tg/dry Tg was 0.89. Thus, the heat resistance deteriorated significantly after wetting, and the water absorption coefficient was as high as 3.0%. The fracture toughness value was evaluated in accordance with (7) Method of Evaluating Fracture Toughness Value of Cured Resin described above. As a result, an insufficient fracture toughness value of 0.9 MPa·m^{0.5} was exhibited. The rubbery state elastic modulus was 10.0 MPa and thus was out of the range. η₀ was 50 mPa·s, and the mass reduction rate was 0.22 mass%.

### (Comparative Example 2)

For the resin composition shown in Table 4, an epoxy resin composition for RTM was prepared with the method described in Example 26 of Patent Document 2 (International Publication No. 2021-241734).

For the epoxy resin composition, E₈₂ and E₂₃, wet Tg and dry Tg, the water absorption coefficient, the fracture toughness value, the rubbery state elastic modulus, η₀, and the mass reduction rate were evaluated in the same manner as in Example 1.

The epoxy resin composition included the component [A] and the component [B], but did not include the component [C], and instead included a bisphenol F type epoxy resin, which was another epoxy resin, and TGpAP. E₈₂ was as low as 2.40 GPa, and E₈₂/E₂₃ was 0.71, showing a large decrease in elastic modulus after wetting. Dry Tg was 184°C, wet Tg was 160°C, and thus wet Tg/dry Tg was 0.87, showing a large decrease in heat resistance after wetting, and the water absorption coefficient was as high as 2.8%. In addition, an insufficient fracture toughness value of 0.8 MPa ·m^{0.5} was exhibited. The rubbery state elastic modulus was 12.0 MPa and thus was out of the range.

### (Comparative Example 3)

For the resin composition shown in Table 4, an epoxy resin composition for RTM was prepared with the method described in Example 24 of Patent Document 2 (Japanese Patent Laid-open Publication No. 2010-150310).

For the epoxy resin composition, E₈₂ and E₂₃, wet Tg and dry Tg, the water absorption coefficient, the fracture toughness value, the rubbery state elastic modulus, η₀, and the mass reduction rate were evaluated in the same manner as in Example 1.

The epoxy resin composition included the component [A] and the component [B], but did not include the component [C]. E₈₂ was as low as 2.40 GPa, and E₈₂/E₂₃ was 0.73, showing a large decrease in elastic modulus after wetting. Dry Tg was 182°C, wet Tg was 158°C, and thus wet Tg/dry Tg was 0.87, showing a large decrease in heat resistance after wetting, and the water absorption coefficient was as high as 2.7%. In addition, an insufficient fracture toughness value of 0.9 MPa·m^{0.5} was exhibited. The rubbery state elastic modulus was 10.1 MPa and thus was out of the range.

### (Comparative Example 4)

For the resin composition shown in Table 4, an epoxy resin composition for RTM was prepared in the same manner as in Example 1, and E₈₂ and E₂₃, wet Tg and dry Tg, the water absorption coefficient, the fracture toughness value, the rubbery state elastic modulus, η₀, and the mass reduction rate were evaluated.

The epoxy resin composition did not include the component [C] but instead included glycidylaniline, which had a low molecular weight. Therefore, the mass reduction rate was 0.41 mass% and thus was out of the range.

### (Comparative Example 5)

For the resin composition shown in Table 4, an epoxy resin composition for RTM was prepared with the method described in Example 3 of Patent Document 4 (International Publication No. 2010-109929).

For the epoxy resin composition, E₈₂ and E₂₃, wet Tg and dry Tg, the water absorption coefficient, the fracture toughness value, the rubbery state elastic modulus, η₀, and the mass reduction rate were evaluated in the same manner as in Example 1.

The epoxy resin composition did not include the component [B] but instead included 4,4'-diaminodiphenyl sulfone, which had high polarity. Therefore, η₀ was 230 mPa·s and thus was out of the range, and the water absorption coefficient of the cured resin was 3.5% and thus was also out of the range.

### (Comparative Example 6)

For the resin composition shown in Table 4, an epoxy resin composition for RTM was prepared in the same manner as in Example 1, and E₈₂ and E₂₃, wet Tg and dry Tg, the water absorption coefficient, the fracture toughness value, the rubbery state elastic modulus, η₀, and the mass reduction rate were evaluated.

The epoxy resin composition did not include the component [A] and instead included "jER (registered trademark)" 630, and therefore the rubbery state elastic modulus was 10.0 MPa and thus was out of the range. The epoxy resin composition had a low elastic modulus at the time of wet heating and low heat resistance at the time of wetting, and the water absorption coefficient was as high as 2.7%. In addition, an insufficient fracture toughness value of 0.8 MPa ·m^{0.5} was exhibited.

### (Comparative Example 7)

For the resin composition shown in Table 4, an epoxy resin composition for RTM was prepared in the same manner as in Example 1, and E₈₂ and E₂₃, wet Tg and dry Tg, the water absorption coefficient, the fracture toughness value, the rubbery state elastic modulus, η₀, and the mass reduction rate were evaluated.

The epoxy resin composition did not include the component [C] and instead included "EPICLON (registered trademark)" 830, and therefore the rubbery state elastic modulus was 9.8 MPa and thus was out of the range. The fracture toughness value was 0.8 MPa ·m^{0.5} and thus was insufficient. In addition, an insufficient elastic modulus at the time of wet heating of 2.40 GPa was exhibited.

**[Table 1-1]**

| | Raw materials of epoxy resin composition | | Example 1 | Example 2 | Example 3 | Example 4 | Example 5 |
|---|---|---|---|---|---|---|---|
| Component [A]: tetrafunctional glycidyl amine type epoxy resin | "SUMI-EPOXY ^{®}" ELM-434VL | Tetraglycidyl diaminodiphenylmethane | 25 | 25 | 25 | 65 | 55 |
| | "Araldite ^{®}" MY721 | | | | | | |
| | "SUMI-EPOXY ^{®}" ELM434 | | | | | | |
| Component [C]: glycidylaniline type epoxy resin represented by Formula (I) | "TOREP^{®}" A-204E | Diglycidyl-p-phenoxyaniline | 30 | 30 | 30 | 20 | 30 |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | | | | | |
| | "EPICLON^{®}" HP-7200H | | 30 | 30 | 30 | | |
| | "jER^{®}" YX-4000 | Biphenyl type epoxy resin | | | | | |
| | NC-3000L | Phenol aralkyl type epoxy resin | | | | | |
| Component [F]: another epoxy resin | GAN | Glycidylaniline | | | | | |
| | "jER^{®}" 828 | Bisphenol A type epoxy resin | | | | | |
| | "EPICLON^{®}" 830 | Bisphenol F type epoxy resin | | | | | |
| | "jER^{®}" 630 | Triglycidyl-p-aminophenol | | | | | |
| Mixture of core-shell type rubber particle and epoxy resin | "Kane Ace ^{®}" MX-416 Masterbatch containing 25 mass% of core shell rubber particles | [D]: core-shell type rubber particle | 5 | 5 | 5 | 5 | 5 |
| | | Tetrafunctional glycidyl amine type epoxy resin (component [A]) | 15 | 15 | 15 | 15 | 15 |
| Mixture of core-shell type rubber particle and epoxy resin | "Kane Ace ^{®}" MX-267 Masterbatch containing 37 mass% of core shell rubber particles | [D]: core-shell type rubber particle | | | | | |
| | | Bisphenol F type epoxy resin (component [F]) | | | | | |
| Component [B]: at least one aromatic amine curing agent selected from alkylbenzenediamine and methylenebisaniline | "jERcure ^{®}" WA | Diethyltoluenediamine | 9.5 | 16.4 | 21.6 | 17.3 | 16.8 |
| | "Ethacure^{®}" 300 | Dimethylthiotoluene diamine | | | | | |
| | "Lonzacure^{®}" M-MIPA | 4,4'-Methylenebis(2-isopropyl-6-methylaniline) | 28.4 | 16.4 | 7.2 | 33.6 | 32.6 |
| | "Lonzacure^{®}" M-CDEA | 4,4'-Methylenebis (3-chloro-2, 6-diethylaniline) | | | | | |
| Another curing agent | "SEIKACURE ^{®}" S | 4,4'-Diaminodiphenyl sulfone | | | | | |
| Mh/Me | | | 0.90 | 0.90 | 0.90 | 1.00 | 1.00 |
| Properties of cured resin | Flexural modulus (23°C, 50% RH): E₂₃ | GPa | 3.75 | 3.60 | 3.50 | 3.70 | 3.75 |
| | Flexural modulus (under wet heating at 82°C): E₈₂ | GPa | 3.20 | 3.00 | 2.90 | 2.90 | 2.90 |
| | E₈₂/E₂₃ | - | 0.85 | 0.83 | 0.83 | 0.78 | 0.77 |
| | Dry Tg | °C | 178 | 181 | 184 | 197 | 186 |
| | Wet Tg | °C | 170 | 170 | 170 | 176 | 167 |
| | Wet Tg/dry Tg | - | 0.96 | 0.94 | 0.92 | 0.89 | 0.90 |
| | Rubbery state elastic modulus | MPa | 4.2 | 6.4 | 7.2 | 8.0 | 6.8 |
| | Water absorption coefficient | % | 1.7 | 2.0 | 2.2 | 2.5 | 2.4 |
| | K1c | MPₐ ·m^{0.5} | 1.2 | 1.0 | 1.0 | 1.0 | 1.0 |
| Properties of uncured resin | Mass reduction rate after 30 minutes at 110°C | mass% | 0.12 | 0.16 | 0.20 | 0.18 | 0.17 |
| | Viscosity at 110°C: η₀ | mPa ·s | 40 | 31 | 25 | 24 | 22 |

**[Table 1-2]**

| | Raw materials of epoxy resin composition | | Example 6 | Example 7 | Example 8 |
|---|---|---|---|---|---|
| Component [A]: tetrafunctional glycidyl amine type epoxy resin | "SUMI-EPOXY ^{®}" ELM-434VL | Tetraglycidyl diaminodiphenylmethane | 45 | 64 | 43 |
| | "Araldite ^{®}" MY721 | | | | |
| | "SUMI-EPOXY ^{®}" ELM434 | | | | |
| Component [C]: glycidylaniline type epoxy resin represented by Formula (I) | "TOREP^{®}" A-204E | Diglycidyl-p-phenoxyaniline | 40 | 30 | 30 |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | | | |
| | "EPICLON^{®}" HP-7200H | | | | |
| | "jER^{®}" YX-4000 | Biphenyl type epoxy resin | | | |
| | NC-3000L | Phenol aralkyl type epoxy resin | | | |
| Component [F]: another epoxy resin | GAN | Glycidylaniline | | | |
| | "jER^{®}" 828 | Bisphenol A type epoxy resin | | | |
| | "EPICLON^{®}" 830 | Bisphenol F type epoxy resin | | | |
| | "jER^{®}" 630 | Triglycidyl-p-aminophenol | | | |
| Mixture of core-shell type rubber particle and epoxy resin | "Kane Ace ^{®}" MX-416 Masterbatch containing 25 mass% of core shell rubber particles | [D]: core-shell type rubber particle | 5 | 2 | 9 |
| | | Tetrafunctional glycidyl amine type epoxy resin (component [A]) | 15 | 6 | 27 |
| Mixture of core-shell type rubber particle and epoxy resin | "Kane Ace ^{®}" MX-267 Masterbatch containing 37 mass% of core shell rubber particles | [D]: core-shell type rubber particle | | | |
| | | Bisphenol F type epoxy resin (component [F]) | | | |
| Component [B]: at least one aromatic amine curing agent selected from alkylbenzenediamine and methylenebisaniline | "jERcure ^{®}" WA | Diethyltoluenediamine | 16.2 | 16.7 | 16.9 |
| | "Ethacure^{®}" 300 | Dimethylthiotoluene diamine | | | |
| | "Lonzacure^{®}" M-MIPA | 4,4'-Methylenebis (2-isopropyl-6-methylaniline) | 31.5 | 32.4 | 32.7 |
| | "Lonzacure^{®}" M-CDEA | 4,4'-Methylenebis (3-chloro-2, 6-diethylaniline) | | | |
| Another curing agent | "SEIKACURE ^{®}" S | 4,4'-Diaminodiphenyl sulfone | | | |
| Mh/Me | | | 1.00 | 1.00 | 1.00 |
| Properties of cured resin | Flexural modulus (23°C, 50% RH): E₂₃ | GPa | 3.80 | 3.85 | 3.60 |
| | Flexural modulus (under wet heating at 82°C): E₈₂ | GPa | 2.95 | 3.00 | 2.90 |
| | E₈₂/E₂₃ | - | 0.78 | 0.78 | 0.81 |
| | Dry Tg | °C | 178 | 185 | 186 |
| | Wet Tg | °C | 159 | 166 | 168 |
| | Wet Tg/dry Tg | - | 0.89 | 0.90 | 0.90 |
| | Rubbery state elastic modulus | MPa | 4.9 | 6.9 | 7.0 |
| | Water absorption coefficient | % | 2.5 | 2.4 | 2.4 |
| | K1c | MPa ·m^{0.5} | 1.1 | 0.9 | 1.4 |
| Properties of uncured resin | Mass reduction rate after 30 minutes at 110°C | mass% | 0.16 | 0.16 | 0.15 |
| | Viscosity at 110°C: η₀ | mPa ·s | 18 | 20 | 34 |

**[Table 2-1]**

| | Raw materials of epoxy resin composition | | Example 9 | Example 10 | Example 11 | Example 12 |
|---|---|---|---|---|---|---|
| Component [A]: tetrafunctional glycidyl amine type epoxy resin | "SUMI-EPOXY ^{®}" ELM-434VL | Tetraglycidyl diaminodiphenylmethane | 50 | 25 | 25 | 25 |
| | "Araldite ^{®}" MY721 | | | | | |
| | "SUMI-EPOXY ^{®}" ELM434 | | | | | |
| Component [C]: glycidylaniline type epoxy resin represented by Formula (I) | "TOREP^{®}" A-204E | Diglycidyl-p-phenoxyaniline | 20 | 20 | 30 | 30 |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | 15 | 40 | | |
| | "EPICLON^{®}" HP-7200H | | | | 30 | 30 |
| | "jER^{®}" YX-4000 | Biphenyl type epoxy resin | | | | |
| | NC-3000L | Phenol aralkyl type epoxy resin | | | | |
| Component [F]: another epoxy resin | GAN | Glycidylaniline | | | | |
| | "jER^{®}" 828 | Bisphenol A type epoxy resin | | | | |
| | "EPICLON^{®}" 830 | Bisphenol F type epoxy resin | | | | |
| | "jER^{®}" 630 | Triglycidyl-p-aminophenol | | | | |
| Mixture of core-shell type rubber particle and epoxy resin | "Kane Ace ^{®}" MX-416 Masterbatch containing 25 mass% of core shell rubber particles | [D]: core-shell type rubber particle | 5 | 5 | 5 | 5 |
| | | Tetrafunctional glycidyl amine type epoxy resin (component [A]) | 15 | 15 | 15 | 15 |
| Mixture of core-shell type rubber particle and epoxy resin | "Kane Ace ^{®}" MX-267 Masterbatch containing 37 mass% of core shell rubber particles | [D]: core-shell type rubber particle | | | | |
| | | Bisphenol F type epoxy resin (component [F]) | | | | |
| Component [B]: at least one aromatic amine curing agent selected from alkylbenzenediamine and methylenebisaniline | "jERcure ^{®}" WA | Diethyltoluenediamine | 14.3 | 12.1 | 10.8 | 16.3 |
| | "Ethacure^{®}" 300 | Dimethylthiotoluene diamine | | | | |
| | "Lonzacure^{®}" M-MIPA | 4,4'-Methylenebis(2-isopropyl-6-methylaniline) | 27.7 | 23.5 | 21.0 | 31.6 |
| | "Lonzacure^{®}" M-CDEA | 4,4' -Methylenebis (3-chloro-2,6-diethylaniline) | | | | |
| Another curing agent | "SEIKACURE ^{®}" S | 4,4'-Diaminodiphenyl sulfone | | | | |
| Mh/Me | | | 0.90 | 0.90 | 0.80 | 1.20 |
| Properties of cured resin | Flexural modulus (23°C, 50% RH): E₂₃ | GPa | 3.60 | 3.30 | 3.60 | 3.90 |
| | Flexural modulus (under wet heating at 82°C): E₈₂ | GPa | 3.00 | 2.90 | 2.95 | 3.00 |
| | E₈₂/E₂₃ | - | 0.83 | 0.88 | 0.82 | 0.77 |
| | Dry Tg | °C | 190 | 184 | 170 | 167 |
| | Wet Tg | °C | 173 | 175 | 155 | 152 |
| | Wet Tg/dry Tg | - | 0.91 | 0.95 | 0.91 | 0.91 |
| | Rubbery state elastic modulus | MPa | 8.0 | 6.2 | 4.2 | 4.1 |
| | Water absorption coefficient | % | 2.3 | 1.7 | 2.1 | 2.2 |
| | K1c | MPa ·m^{0.5} | 1.0 | 1.2 | 1.0 | 1.0 |
| Properties of uncured resin | Mass reduction rate after 30 minutes at 110°C | mass% | 0.14 | 0.13 | 0.10 | 0.16 |
| | Viscosity at 110°C: η₀ | mPa ·s | 29 | 47 | 41 | 38 |

**[Table 2-2]**

| | Raw materials of epoxy resin composition | | Example 13 | Example 14 | Example 15 |
|---|---|---|---|---|---|
| Component [A]: tetrafunctional glycidyl amine type epoxy resin | "SUMI-EPOXY ^{®}" ELM-434VL | Tetraglycidyl diaminodiphenylmethane | 25 | 25 | 25 |
| | "Araldite ^{®}" MY721 | | | | |
| | "SUMI-EPOXY ^{®}" ELM434 | | | | |
| Component [C]: glycidylaniline type epoxy resin represented by Formula (I) | "TOREP^{®}" A-204E | Diglycidyl-p-phenoxyaniline | 30 | 30 | 30 |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | 10 | 10 | |
| | "EPICLON^{®}" HP-7200H | | | | 30 |
| | "jER^{®}" YX-4000 | Biphenyl type epoxy resin | | 20 | |
| | NC-3000L | Phenol aralkyl type epoxy resin | 20 | | |
| Component [F]: another epoxy resin | GAN | Glycidylaniline | | | |
| | "jER^{®}" 828 | Bisphenol A type epoxy resin | | | |
| | "EPICLON^{®}" 830 | Bisphenol F type epoxy resin | | | |
| | "jER^{®}" 630 | Triglycidyl-p-aminophenol | | | |
| Mixture of core-shell type rubber particle and epoxy resin | "Kane Ace ^{®}" MX-416 Masterbatch containing 25 mass% of core shell rubber particles | [D]: core-shell type rubber particle | 5 | 5 | 5 |
| | | Tetrafunctional glycidyl amine type epoxy resin (component [A]) | 15 | 15 | 15 |
| Mixture of core-shell type rubber particle and epoxy resin | "Kane Ace ^{®}" MX-267 Masterbatch containing 37 mass% of core shell rubber particles | [D]: core-shell type rubber particle | | | |
| | | Bisphenol F type epoxy resin (component [F]) | | | |
| Component [B]: at least one aromatic amine curing agent selected from alkylbenzenediamine and methylenebisaniline | "jERcure ^{®}" WA | Diethyltoluenediamine | 13.0 | 12.3 | |
| | "Ethacure^{®}" 300 | Dimethylthiotoluene diamine | | | |
| | "Lonzacure^{®}" M-MIPA | 4,4'-Methylenebis(2-isopropyl-6-methylaniline) | 25.2 | 23.9 | 44.9 |
| | "Lonzacure^{®}" M-CDEA | 4,4'-Methylenebis(3-chloro-2, 6-diethylaniline) | | | |
| Another curing agent | "SEIKACURE ^{®}" S | 4, 4'-Diaminodiphenyl sulfone | | | |
| Mh/Me | | | 0.90 | 0.90 | 0.90 |
| Properties of cured resin | Flexural modulus (23°C, 50% RH): E₂₃ | GPa | 3.90 | 3.85 | 3.85 |
| | Flexural modulus (under wet heating at 82°C): E₈₂ | GPa | 3.15 | 3.15 | 3.20 |
| | E₈₂/E₂₃ | - | 0.81 | 0.82 | 0.83 |
| | Dry Tg | °C | 173 | 175 | 175 |
| | Wet Tg | °C | 166 | 165 | 164 |
| | Wet Tg/dry Tg | - | 0.96 | 0.94 | 0.94 |
| | Rubbery state elastic modulus | MPa | 5.0 | 5.5 | 3.5 |
| | Water absorption coefficient | % | 1.8 | 1.7 | 1.5 |
| | K1c | MPa ·m^{0.5} | 1.1 | 1.2 | 1.3 |
| Properties of uncured resin | Mass reduction rate after 30 minutes at 110°C | mass% | 0.14 | 0.13 | 0.07 |
| | Viscosity at 110°C: η₀ | mPa ·s | 34 | 30 | 50 |

**[Table 3]**

| | Raw materials of epoxy resin composition | | Example 16 | Example 17 | Example 18 | Example 19 | Example 20 | Example 21 |
|---|---|---|---|---|---|---|---|---|
| Component [A]: tetrafunctional glycidyl amine type epoxy resin | "SUMI-EPOXY ^{®}" ELM-434VL | Tetraglycidyl diaminodiphenylmethane | 40 | 40 | 40 | 25 | 40 | 25 |
| | "Araldite ^{®}" MY721 | | | | | | | |
| | "SUMI-EPOXY ^{®}" ELM434 | | | | | | | |
| Component [C]: glycidylaniline type epoxy resin represented by Formula (I) | "TOREP^{®}" A-204E | Diglycidyl-p-phenoxyaniline | 20 | 20 | 20 | 30 | 30 | 30 |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | 25 | 10 | 10 | | | |
| | "EPICLON^{®}" HP-7200H | | | | | 30 | 30 | 30 |
| | "jER^{®}" YX-4000 | Biphenyl type epoxy resin | | | 15 | | | |
| | NC-3000L | Phenol aralkyl type epoxy resin | | 15 | | | | |
| Component [F]: another epoxy resin | GAN | Glycidylaniline | | | | | | |
| | "jER^{®}" 828 | Bisphenol A type epoxy resin | | | | | | |
| | "EPICLON^{®}" 830 | Bisphenol F type epoxy resin | | | | | | |
| | "jER^{®}" 630 | Triglycidyl-p-aminophenol | | | | | | |
| Mixture of core-shell type rubber particle and epoxy resin | "Kane Ace ^{®}" MX-416 Masterbatch containing 25 mass% of core shell rubber particles | [D]: core-shell type rubber particle | 5 | 5 | 5 | 5 | | 5 |
| | | Tetrafunctional glycidyl amine type epoxy resin (component [A]) | 15 | 15 | 15 | 15 | | 15 |
| Mixture of core-shell type rubber particle and epoxy resin | "Kane Ace ^{®}" MX-267 Masterbatch containing 37 mass% of core shell rubber particles | [D]: core-shell type rubber particle | | | | | | |
| | | Bisphenol F type epoxy resin (component [F]) | | | | | | |
| Component [B]: at least one aromatic amine curing agent selected from alkylbenzenediamine and methylenebisaniline | "jERcure ^{®}" WA | Diethyltoluenediamine | | | | | | 7.2 |
| | "Ethacure^{®}" 300 | Dimethylthiotoluene diamine | 41.6 | 42.7 | 41.2 | 22.8 | 22.8 | 25.7 |
| | "Lonzacure^{®}" M-MIPA | 4,4'-Methylenebis(2-isopropyl-6-methylaniline) | | | | 21.9 | 21.9 | |
| | "Lonzacure^{®}" M-CDEA | 4,4'-Methylenebis(3-chloro-2, 6-diethylaniline) | | | | | | |
| Another curing agent | "SEIKACURE ^{®}" S | 4,4'-Diaminodiphenyl sulfone | | | | | | |
| Mh/Me | | | 1.10 | 1.10 | 1.10 | 1.10 | 1.10 | 1.00 |
| Properties of cured resin | Flexural modulus (23°C, 50% RH): E₂₃ | GPa | 3.80 | 3.90 | 3.85 | 3.80 | 4.00 | 3.80 |
| | Flexural modulus (under wet heating at 82°C): E₈₂ | GPa | 3.25 | 3.20 | 3.25 | 3.25 | 3.40 | 3.30 |
| | E₈₂/E₂₃ | - | 0.86 | 0.82 | 0.84 | 0.86 | 0.85 | 0.87 |
| | Dry Tg | °C | 168 | 169 | 167 | 163 | 164 | 168 |
| | Wet Tg | °C | 158 | 157 | 156 | 155 | 156 | 161 |
| | Wet Tg/dry Tg | - | 0.94 | 0.93 | 0.93 | 0.95 | 0.95 | 0.96 |
| | Rubbery state elastic modulus | MPa | 5.2 | 5.8 | 6.1 | 6.3 | 6.5 | 5.0 |
| | Water absorption coefficient | % | 2.0 | 2.2 | 1.8 | 1.7 | 1.6 | 1.8 |
| | K1c | MPa ·m^{0.5} | 1.2 | 1.2 | 1.1 | 1.1 | 0.8 | 1.1 |
| Properties of uncured resin | Mass reduction rate after 30 minutes at 110°C | mass% | 0.16 | 0.15 | 0.16 | 0.10 | 0.11 | 0. 19 |
| | Viscosity at 110°C: η₀ | mPa ·s | 20 | 22 | 27 | 40 | 33 | 37 |

**[Table 4-1]**

| | Raw materials of epoxy resin composition | | Comparative Example 1 | Comparative Example 2 | Comparative Example 3 | Comparative Example 4 |
|---|---|---|---|---|---|---|
| Component [A]: tetrafunctional glycidyl amine type epoxy resin | "SUMI-EPOXY ^{®}" ELM-434VL | Tetraglycidyl diaminodiphenylmethane | | | | 25 |
| | "Araldite ^{®}" MY721 | | | 25 | 45 | |
| | "SUMI-EPOXY ^{®}" ELM434 | | | | | |
| Component [C]: glycidylaniline type epoxy resin represented by Formula (I) | "TOREP^{®}" A-204E | Diglycidyl-p-phenoxyaniline | | | | |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | | | | |
| | "EPICLON^{®}" HP-7200H | | | | | 30 |
| | "jER^{®}" YX-4000 | Biphenyl type epoxy resin | | | | |
| | NC-3000L | Phenol aralkyl type epoxy resin | | | | |
| Component [F]: another epoxy resin | GAN | Glycidylaniline | | | | 30 |
| | "jER^{®}" 828 | Bisphenol A type epoxy resin | | | 40 | |
| | "EPICLON^{®}" 830 | Bisphenol F type epoxy resin | 17 | 30 | | |
| | "jER^{®}" 630 | Triglycidyl-p-aminophenol | 70 | 30 | | |
| Mixture of core-shell type rubber particle and epoxy resin | "Kane Ace ^{®}" MX-416 Masterbatch containing 25 mass% of core shell rubber particles | [D]: core-shell type rubber particle | 4.27 | 5 | 5 | 5 |
| | | Tetrafunctional glycidyl amine type epoxy resin (component [A]) | 12.81 | 15 | 15 | 15 |
| Mixture of core-shell type rubber particle and epoxy resin | "Kane Ace ^{®}" MX-267 Masterbatch containing 37 mass% of core shell rubber particles | [D]: core-shell type rubber particle | | | | |
| | | Bisphenol F type epoxy resin (component [F]) | | | | |
| Component [B]: at least one aromatic amine curing agent selected from alkylbenzenediamine and methylenebisaniline | "jERcure ^{®}" WA | Diethyltoluenediamine | | 18.0 | 15.0 | 9.5 |
| | "Ethacure^{®}" 300 | Dimethylthiotoluene diamine | | | | |
| | "Lonzacure^{®}" M-MIPA | 4,4'-Methylenebis(2-isopropyl-6-methylaniline) | | 40.0 | 34.0 | 28.9 |
| | "Lonzacure^{®}" M-CDEA | 4,4'-Methylenebis(3-chloro-2, 6-diethylaniline) | 104.0 | | | |
| Another curing agent | "SEIKACURE ^{®}" S | 4,4'-Diaminodiphenyl sulfone | | | | |
| Mh/Me | | | 1.18 | 1. 09 | 1. 04 | 0.90 |
| Properties of cured resin | Flexural modulus (23°C, 50% RH): E₂₃ | GPa | 3.80 | 3.40 | 3.30 | 3.80 |
| | Flexural modulus (under wet heating at 82°C): E₈₂ | GPa | 2.60 | 2.40 | 2.40 | 3.00 |
| | E₈₂/E₂₃ | - | 0.68 | 0.71 | 0.73 | 0.79 |
| | Dry Tg | °C | 175 | 184 | 182 | 179 |
| | Wet Tg | °C | 155 | 160 | 158 | 163 |
| | Wet Tg/dry Tg | - | 0.89 | 0.87 | 0.87 | 0.91 |
| | Rubbery state elastic modulus | MPa | 10.0 | 12.0 | 10.1 | 4.6 |
| | Water absorption coefficient | % | 3.0 | 2.8 | 2.7 | 2.1 |
| | K1c | MPa ·m^{0.5} | 0.9 | 0.8 | 0.9 | 1.0 |
| Properties of uncured resin | Mass reduction rate after 30 minutes at 110°C | mass% | 0.22 | 0. 19 | 0. 16 | 0.41 |
| | Viscosity at 110°C: η₀ | mPa ·s | 50 | 14 | 19 | 32 |

**[Table 4-2]**

| | Raw materials of epoxy resin composition | | Comparative Example 5 | Comparative Example 6 | Comparative Example 7 |
|---|---|---|---|---|---|
| Component [A]: tetrafunctional glycidyl amine type epoxy resin | "SUMI-EPOXY ^{®}" ELM-434VL | Tetraglycidyl diaminodiphenylmethane | | | 25 |
| | "Araldite ^{®}" MY721 | | | | |
| | "SUMI-EPOXY ^{®}" ELM434 | | 70 | | |
| Component [C]: glycidylaniline type epoxy resin represented by Formula (I) | "TOREP^{®}" A-204E | Diglycidyl-p-phenoxyaniline | 30 | 20 | |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | | | |
| | "EPICLON^{®}" HP-7200H | | | 25 | 30 |
| | "jER^{®}" YX-4000 | Biphenyl type epoxy resin | | | |
| | NC-3000L | Phenol aralkyl type epoxy resin | | | |
| Component [F]: another epoxy resin | GAN | Glycidylaniline | | | |
| | "jER^{®}" 828 | Bisphenol A type epoxy resin | | | |
| | "EPICLON^{®}" 830 | Bisphenol F type epoxy resin | | | 30 |
| | "jER^{®}" 630 | Triglycidyl-p-aminophenol | | 31 | |
| Mixture of core-shell type rubber particle and epoxy resin | "Kane Ace ^{®}" MX-416 Masterbatch containing 25 mass% of core shell rubber particles | [D]: core-shell type rubber particle | | | 5 |
| | | Tetrafunctional glycidyl amine type epoxy resin (component [A]) | | | 15 |
| Mixture of core-shell type rubber particle and epoxy resin | "Kane Ace ^{®}" MX-267 Masterbatch containing 37 mass% of core shell rubber particles | [D]: core-shell type rubber particle | | 5 | |
| | | Bisphenol F type epoxy resin (component [F]) | | 8.5 | |
| Component [B]: at least one aromatic amine curing agent selected from alkylbenzenediamine and methylenebisaniline | "jERcure ^{®}" WA | Diethyltoluenediamine | | 14.9 | 13.5 |
| | "Ethacure^{®}" 300 | Dimethylthiotoluene diamine | | | |
| | "Lonzacure^{®}" M-MIPA | 4,4'-Methylenebis(2-isopropyl-6-methylaniline) | | 29.0 | 26.1 |
| | "Lonzacure^{®}" M-CDEA | 4,4'-Methylenebis(3-chloro-2, 6-diethylaniline) | | | |
| Another curing agent | "SEIKACURE ^{®}" S | 4,4'-Diaminodiphenyl sulfone | 50.0 | | |
| Mh/Me | | | 1.05 | 1.00 | 1.00 |
| Properties of cured resin | Flexural modulus (23°C, 50% RH): E₂₃ | GPa | 4.20 | 3.15 | 3.20 |
| | Flexural modulus (under wet heating at 82°C): E₈₂ | GPa | 3.00 | 2.30 | 2.40 |
| | E₈₂/E₂₃ | - | 0.71 | 0.73 | 0.75 |
| | Dry Tg | °C | 194 | 153 | 176 |
| | Wet Tg | °C | 145 | 134 | 156 |
| | Wet Tg/dry Tg | - | 0.75 | 0.88 | 0.89 |
| | Rubbery state elastic modulus | MPa | 6.2 | 10.0 | 9.8 |
| | Water absorption coefficient | % | 3.5 | 2.7 | 2.4 |
| | K1c | MPa ·m^{0.5} | 0. 6 | 0.8 | 0.8 |
| Properties of uncured resin | Mass reduction rate after 30 minutes at 110°C | mass% | 0.11 | 0.17 | 0.14 |
| | Viscosity at 110°C: η₀ | mPa ·s | 230 | 20 | 32 |

The unit of each component in Tables is parts by mass.

The properties of the fiber-reinforced composite material of each Example are as follows.

### (Example 1')

For the resin composition shown in Table 5, a fiber-reinforced composite material was prepared in accordance with <Preparation of Fiber-Reinforced Composite Material> described above.

The open hole compression of this fiber-reinforced composite material was acquired in accordance with (8) Method of Evaluating Open Hole Compression (23°C, 50% RH): OHC₂₃ of Fiber-Reinforced Composite Material and (9) Method of Evaluating Open Hole Compression (82°C under wet condition): OHC₈₂ of Fiber-Reinforced Composite Material described above. As a result, OHC₂₃ was 316 MPa, OHC₈₂ was 250 MPa, and OHC₈₂/OHC₂₃ was 0.79, showing an excellent compression property at the time of wet heating. The compression strength after impact was acquired, and as a result, an excellent impact resistance of 307 MPa was exhibited.

### (Examples 6', 12', 16', 18')

Fiber-reinforced composite materials were prepared and evaluated in the same manner as in Example 1 except that the resin composition was changed as shown in Table 5.

OHC₂₃, OHC₈₂, and CAI of the fiber-reinforced composite material of each Example were evaluated. As a result, excellent compression properties at the time of wet heating and excellent compression strength after impact were exhibited at all levels.

### (Comparative Example 1')

Fiber-reinforced composite materials were prepared and evaluated in the same manner as in Example 1 except that the resin composition was changed as shown in Table 5.

In this fiber-reinforced composite material, OHC₂₃ was 311 MPa, OHC₈₂ was 200 MPa, and OHC₈₂/OHC₂₃ was as low as 0.64. In addition, CAI was 269 MPa, and thus the impact resistance was also insufficient.

### (Comparative Example 7')

Fiber-reinforced composite materials were prepared and evaluated in the same manner as in Example 1 except that the resin composition was changed as shown in Table 5.

In the fiber-reinforced composite material, OHC₂₃ was 264 MPa, and the compression strength under a room temperature environment was low. Furthermore, OHC₈₂ was 191 MPa, and the compression property at the time of wet heating was low. In addition, CAI was 255 MPa, and thus the impact resistance was also insufficient.

**[Table 5-1]**

| | Raw materials of epoxy resin composition | | Example 1' | Example 6' | Example 12' | Example 16' | Example 18' |
|---|---|---|---|---|---|---|---|
| Component [A]: tetrafunctional glycidyl amine type epoxy resin | "SUMI-EPOXY ^{®}" ELM-434VL | Tetraglycidyl diaminodiphenylmethane | 25 | 45 | 25 | 40 | 40 |
| | "Araldite ^{®}" MY721 | | | | | | |
| | "SUMI-EPOXY ^{®}" ELM434 | | | | | | |
| Component [C]: glycidylaniline type epoxy resin represented by Formula (I) | "TOREP^{®}" A-204E | Diglycidyl-p-phenoxyaniline | 30 | 40 | 30 | 20 | 20 |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | | | | 25 | 10 |
| | "EPICLON^{®}" HP-7200H | | 30 | | 30 | | |
| | "jER^{®}" YX-4000 | Biphenyl type epoxy resin | | | | | 15 |
| | NC-3000L | Phenol aralkyl type epoxy resin | | | | | |
| Component [F]: another epoxy resin | GAN | Glycidylaniline | | | | | |
| | "jER^{®}" 828 | Bisphenol A type epoxy resin | | | | | |
| | "EPICLON^{®}" 830 | Bisphenol F type epoxy resin | | | | | |
| | "jER^{®}" 630 | Triglycidyl-p-aminophenol | | | | | |
| Mixture of core-shell type rubber particle and epoxy resin | "Kane Ace ^{®}" MX-416 Masterbatch containing 25 mass% of core shell rubber particles | [D]: core-shell type rubber particle | 5 | 5 | 5 | 5 | 5 |
| | | Tetrafunctional glycidyl amine type epoxy resin (component [A]) | 15 | 15 | 15 | 15 | 15 |
| Mixture of core-shell type rubber particle and epoxy resin | "Kane Ace ^{®}" MX-267 Masterbatch containing 37 mass% of core shell rubber particles | [D]: core-shell type rubber particle | | | | | |
| | | Bisphenol F type epoxy resin (component [F]) | | | | | |
| Component [B]: at least one aromatic amine curing agent selected from alkylbenzenediamine and methylenebisaniline | "jERcure ^{®}" WA | Diethyltoluenediamine | 9.5 | 16.2 | 16.3 | | |
| | "Ethacure^{®}" 300 | Dimethylthiotoluene diamine | | | | 41.6 | 41.2 |
| | "Lonzacure^{®}" M-MIPA | 4,4'-Methylenebis(2-isopropyl-6-methylaniline) | 28.4 | 31.5 | 31.6 | | |
| | "Lonzacure^{®}" M-CDEA | 4,4'-Methylenebis(3-chloro-2,6-diethylaniline) | | | | | |
| Another curing agent | "SEIKACURE ^{®}" S | 4,4'-Diaminodiphenyl sulfone | | | | | |
| Mh/Me | | | 0.90 | 1.00 | 1.20 | 1.10 | 1.10 |
| Properties of fiber-reinforced composite material | OHC (23°C, 50%RH): OHC₂₃ | MPa | 316 | 321 | 329 | 317 | 324 |
| | OHC (under wet heating at 82°C): OHC₈₂ | MPa | 250 | 231 | 236 | 248 | 255 |
| | OHC₈₂/OHC₂₃ | | 0.79 | 0.72 | 0.72 | 0.78 | 0.79 |
| | CAI | MPa | 307 | 295 | 284 | 310 | 295 |

**[Table 5-2]**

| | Raw materials of epoxy resin composition | | Comparative Example 1' | Comparative Example 7' |
|---|---|---|---|---|
| Component [A]: tetrafunctional glycidyl amine type epoxy resin | "SUMI-EPOXY ^{®}" ELM-434VL | Tetraglycidyl diaminodiphenylmethane | | 25 |
| | "Araldite ^{®}" MY721 | | | |
| | "SUMI-EPOXY ^{®}" ELM434 | | | |
| Component [C]: glycidylaniline type epoxy resin represented by Formula (I) | "TOREP^{®}" A-204E | Diglycidyl-p-phenoxyaniline | | |
| Component [E]: at least one solid epoxy resin selected from the group consisting of dicyclopentadiene type epoxy resins, biphenyl type epoxy resins, phenol aralkyl type epoxy resins, and naphthalene type epoxy resins | "EPICLON^{®}" HP-7200L | Dicyclopentadiene type epoxy resin | | |
| | "EPICLON^{®}" HP-7200H | | | 30 |
| | "jER^{®}" YX-4000 | Biphenyl type epoxy resin | | |
| | NC-3000L | Phenol aralkyl type epoxy resin | | |
| Component [F]: another epoxy resin | GAN | Glycidylaniline | | |
| | "jER^{®}" 828 | Bisphenol A type epoxy resin | | |
| | "EPICLON^{®}" 830 | Bisphenol F type epoxy resin | 17 | 30 |
| | "jER^{®}" 630 | Triglycidyl-p-aminophenol | 70 | |
| Mixture of core-shell type rubber particle and epoxy resin | "Kane Ace ^{®}" MX-416 Masterbatch containing 25 mass% of core shell rubber particles | [D]: core-shell type rubber particle | 4.27 | 5 |
| | | Tetrafunctional glycidyl amine type epoxy resin (component [A]) | 12.81 | 15 |
| Mixture of core-shell type rubber particle and epoxy resin | "Kane Ace ^{®}" MX-267 Masterbatch containing 37 mass% of core shell rubber particles | [D]: core-shell type rubber particle | | |
| | | Bisphenol F type epoxy resin (component [F]) | | |
| Component [B]: at least one aromatic amine curing agent selected from alkylbenzenediamine and methylenebisaniline | "jERcure ^{®}" WA | Diethyltoluenediamine | | 13.5 |
| | "Ethacure^{®}" 300 | Dimethylthiotoluene diamine | | |
| | "Lonzacure^{®}" M-MIPA | 4,4'-Methylenebis(2-isopropyl-6-methylaniline) | | 26.1 |
| | "Lonzacure^{®}" M-CDEA | 4,4'-Methylenebis(3-chloro-2,6-diethylaniline) | 104.0 | |
| Another curing agent | "SEIKACURE ^{®}" S | 4,4' -Diaminodiphenyl sulfone | | |
| Mh/Me | | | 1.18 | 1.00 |
| Properties of fiber-reinforced composite material | OHC (23°C, 50%RH) : OHC₂₃ | MPa | 311 | 264 |
| | OHC (under wet heating at 82°C): OHC₈₂ | MPa | 200 | 191 |
| | OHC₈₂/OHC₂₃ | | 0.64 | 0.72 |
| | CAI | MPa | 269 | 255 |

### INDUSTRIAL APPLICABILITY

The epoxy resin composition for RTM of the present invention can provide a cured epoxy resin having a low viscosity and low volatility and having a high elastic modulus and high fracture toughness at the time of wet heating. A fiber-reinforced composite material including the epoxy resin composition is also excellent in a compression property and impact resistance at the time of wet heating, and thus can be suitably used in aerospace members and structural members for general industries.

## Claims

1. An epoxy resin composition for resin transfer molding (RTM) comprising a component [A], a component [B], and a component [C] described below:
[A] a tetrafunctional glycidyl amine type epoxy resin,
[B] at least one aromatic amine curing agent selected from the group consisting of an alkylbenzenediamine and a methylenebisaniline,
[C] an aniline type epoxy resin represented by Formula (I): 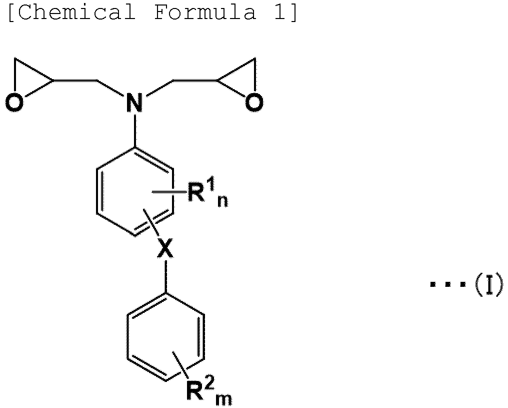
wherein R¹ and R² each represent at least one selected from aliphatic hydrocarbon groups having a carbon number of 1 or more and 4 or less, in a case where a plurality of R¹s are present, the plurality of R¹s are identical or different, in a case where a plurality of R²s are present, the plurality of R²s are identical or different, n is an integer of 0 or more and 4 or less, m is an integer of 0 or more and 5 or less, and X represents -O- or -S-,
the epoxy resin composition for RTM satisfying all of Condition 1 to Condition 4 described below:
Condition 1: in the epoxy resin composition for RTM, a viscosity at 110°C is 1 mPa·s or more and 200 mPa·s or less,
Condition 2: in the epoxy resin composition for RTM, a mass reduction rate after heating the epoxy resin composition for RTM at 110°C for 30 minutes is 0.3 mass% or less,
Condition 3: a cured resin obtained by curing the epoxy resin composition for RTM at 180°C for 2 hours has a rubbery state elastic modulus of 2 MPa or more and 8 MPa or less,
Condition 4: a cured resin obtained by curing the epoxy resin composition for RTM at 180°C for 2 hours has a water absorption coefficient of 1% or more and 3% or less.

2. The epoxy resin composition for RTM according to claim 1, wherein the component [C] is included in an amount of 10 parts by mass or more and 50 parts by mass or less with respect to 100 parts by mass of a total epoxy resin.

3. The epoxy resin composition for RTM according to claim 1 or 2, comprising a core-shell type rubber particle as a component [D] in an amount of 1 part by mass or more and 10 parts by mass or less with respect to 100 parts by mass of the total epoxy resin.

4. The epoxy resin composition for RTM according to claim 1, comprising at least one solid epoxy resin as a component [E] in an amount of 10 parts by mass or more and 50 parts by mass or less with respect to 100 parts by mass of the total epoxy resin, the at least one solid epoxy resin selected from the group consisting of dicyclopentadiene type epoxy resins, biphenyl type epoxy resins, phenol aralkyl type epoxy resins, and naphthalene type epoxy resins.

5. The epoxy resin composition for RTM according to claim 1 or 4, comprising both an alkylbenzenediamine and a methylenebisaniline as the component [B].

6. The epoxy resin composition for RTM according to claim 1 or 4, wherein the component [B] is an alkylbenzenediamine.

7. The epoxy resin composition for RTM according to claim 1 or 4, comprising dimethylthiotoluenediamine as the alkylbenzenediamine.

8. The epoxy resin composition for RTM according to claim 1 or 4, comprising 4,4-methylenebis(isopropyl-6-methylaniline) as the methylenebisaniline.

9. The epoxy resin composition for RTM according to claim 1 or 4, having a value (Mh/Me) of 0.8 or more and 1.1 or less, the value (Mh/Me) obtained by dividing Mh representing a sum of moles of active hydrogen contained in the component [B] by Me representing a sum of moles of active groups contained in the total epoxy resin.

10. A cured resin obtained by thermally curing the epoxy resin composition for RTM according to claim 1 or 4.

11. A fiber-reinforced composite material comprising the cured resin according to claim 10 and a reinforcing-fiber base material.

12. The fiber-reinforced composite material according to claim 11, wherein the reinforcing-fiber base material is a carbon fiber base material.

13. A method for producing a fiber-reinforced composite material, the method comprising:
injecting the epoxy resin composition for RTM according to claim 1 or 4 into a reinforcing-fiber base material disposed in a mold heated to 70°C or more and 190°C or less;
impregnating the epoxy resin composition for RTM into the reinforcing-fiber base material; and
curing the epoxy resin composition for RTM in the mold.

14. The method for producing a fiber-reinforced composite material according to claim 13, wherein the reinforcing-fiber base material is a carbon fiber base material.
